# EUROPÄISCHE PATENTSCHRIFT

(11) **EP 2 468 594 B1**
(45) Veröffentlichungstag und Bekanntmachung des Hinweises auf die Patenterteilung: **15.01.2020**
(21) Anmeldenummer: 11008971.1
(22) Anmeldetag: 11.11.2011
(51) Int. Cl.: B60T 7/20, B60T 13/66, B60T 13/68, B60T 15/36, B60T 17/22, B60T 8/18

(54) **PARKBREMSVENTIL UND HIERMIT AUSGESTATTETES PARKBREMSSYSTEM SOWIE FAHRZEUG UND VERFAHREN ZUR STEUERUNG EINES PARKBREMSSYSTEMS**
PARKING BRAKE VALVE AND A PARKING BRAKE SYSTEM WITH THE SAME AS WELL AS VEHICLE AND METHOD FOR CONTROLLING A PARKING BRAKE SYSTEM
SOUPAPE DE FREIN DE STATIONNEMENT ET SYSTÈME DE FREIN DE STATIONNEMENT ÉQUIPÉ DE CELLE-CI, AINSI QUE VÉHICULE ET PROCÉDÉ DE COMMANDE D'UN SYSTÈME DE FREIN DE STATIONNEMENT

(30) Priorität: 16.12.2010 DE 102010054711
(43) Veröffentlichungstag der Anmeldung: 27.06.2012
(73) Patentinhaber: WABCO GmbH, 30453 Hannover (DE)
(72) Erfinder: Klagge Hans-Christian, 30453 Hannover (DE); Lucas, Johann, 31319 Sehnde (DE)
(74) Vertreter: Rabe, Dirk-Heinrich

(56) Entgegenhaltungen:
- DE-A1- 4 327 759
- DE-A1- 10 336 611
- DE-A1-102004 015 447
- US-B1- 6 311 808

## Beschreibung

Die vorliegende Erfindung betrifft ein Parkbremsventil und ein hiermit ausgestattetes Parkbremssystem für ein Fahrzeug. Das Fahrzeug kann als Kraftfahrzeug wie etwa als Personenkraftwagen, Nutzfahrzeug mit zwei oder mehr Fahrzeugachsen, Zugfahrzeug, Anhänger oder dergleichen ausgebildet sein und weist vorzugsweise mindestens zwei Fahrzeugachsen auf, von denen mindestens eine, vorzugsweise aber zwei oder mehr Fahrzeugachsen durch ein Parkbremssystem, auch Feststellbremse genannt, abbremsbar sind, um das Fahrzeug im Stillstand festzustellen oder zum Stillstand zu bringen. Die Erfindung betrifft weiterhin ein Verfahren zur Steuerung eines Parkbremssystems.

Wenn das Parkbremssystem im Fahrzeugstillstand aktiviert ist, wird vielfach nur eine Fahrzeugachse, regelmäßig die Hinterachse, beispielsweise mittels eines Federspeicher-Bremskreises festgestellt. Eine Verbesserung der Parkbremswirkung lässt sich erreichen, wenn zusätzlich auch noch mindestens eine weitere Fahrzeugachse, beispielsweise die Vorderachse, durch Betätigung einer weiteren Achs-Parkbremseinrichtung (zum Beispiel durch Entlüftung weiterer FederspeicherBremszylinder) gebremst ist.

Die US6311808 beschreibt eine kombinierte Betriebs- und Feststellbremsanlage, insbesondere für Kraftfahrzeuge, mit mindestens einer hydraulisch zuspannbaren, kombinierten Betriebs- und Feststellbremse, die im hydraulisch zugespannten Zustand mechanisch verriegelbar ist, wobei eine Verriegelungsvorrichtung direkt die die Radbremse zuspannenden Bauteile mechanisch entgegen der Zuspannrichtung der Bremse zu verriegeln vermag und elektrisch betätigbar ist.

Problematisch bei einem solchen Parkbremssystem ist, dass bei Feststellung von zwei oder mehr Fahrzeugachsen mittels entsprechender Achs-Parkbremseinrichtungen (z. B. durch Federspeicherbremszylinder oder in Wirkstellung befindlicher Betriebsbremsen) unerwünschte Fahrzeugverwindungen auftreten können, wenn Hebe- oder Senkbewegungen stattfinden, beispielsweise ein Anheben oder Absenken eines Fahrgestellaufbaus mittels Druckfluid, ein Anheben oder Absenken von auf der Ladefläche des Fahrzeugs befindlichen Massen wie etwa Containern mittels einer entsprechenden Hebeanlage, oder dergleichen.

An dieser Stelle setzt die Erfindung an, deren Aufgabe es ist, eine Vorrichtung, insbesondere ein Parkbremsventil und ein damit ausgestattetes Parkbremssystem, und eine entsprechendes Verfahren mit verbesserter Funktion beziehungsweise verbessertem Steuerverhalten anzugeben.

Betreffend die Vorrichtung wird die Aufgabe durch die Erfindung mittels einem Parkbremssystem des Anspruchs 1 gelöst.

Es wird ein Parkbremssystem bereitgestellt, das mindestens eine erste, für eine erste Fahrzeugachse vorgesehene Achs-Parkbremseinrichtung sowie eine zweite, für eine zweite Fahrzeugachse vorgesehene Achs-Parkbremseinrichtung aufweist. Erfindungsgemäß ist mit der ersten und/oder zweiten Achs-Parkbremseinrichtung mindestens ein Parkbremsventil gekoppelt, das eine selektive Lösung der ersten und/oder zweiten Achs-Parkbremseinrichtung auch dann ermöglicht, wenn sich das Parkbremssystem in aktiviertem, d.h. bremsendem Zustand befindet.

In einer ersten weiterbildenden Variante ist mit der ersten und/oder zweiten Achs-Parkbremseinrichtung bevorzugt ein einziges Parkbremsventil gekoppelt. In einer zweiten weiterbildenden Variante ist mit der ersten und/oder zweiten Achs-Parkbremseinrichtung bevorzugt ein erstes und ein zweites Parkbremsventil gekoppelt, die separat gebildet sind. Grundsätzlich kann eine geeignete Anzahl von separaten Parkbremsventilen, d.h. eins, zwei, drei, vier oder mehr Parkbremsventile, vorgesehen sein.

Entsprechend sieht eine erste Weiterbildung vor, dass ein erstes Parkbremsventil mit der ersten Achs-Parkbremseinrichtung gekoppelt ist und/oder ein zweites Parkbremsventil mit der zweiten Achs-Parkbremseinrichtung gekoppelt ist. Insbesondere ist vorgesehen, dass
mehr als ein Parkbremsventil mit der ersten und/oder zweiten Achs-Parkbremseinrichtung gekoppelt ist.

Durch die selektive Lösbarkeit der ersten und/oder zweiten Achs-Parkbremseinrichtung bei weiterhin wirksamem Parkbremssystem, d.h. z.B. weiterhin wirksamer zweiter oder erster Achs-Parkbremseinrichtung, lassen sich zum Beispiel Fahrzeugverwindungen bei Hebe- und/oder Senkbewegungen von Fahrzeugkomponenten unterbinden, zugleich aber die Parkbremswirkung beibehalten. Durch die erste und die zweite Achs-Parkbremseinrichtung lässt sich ferner eine sehr effektive Parkbremswirkung sicherstellen, wenn sich sowohl die erste als auch die zweite Achs-Parkbremseinrichtung in ihrem aktivierten, d.h. bremsenden Zustand befinden.

Zur Vermeidung von Fahrzeugverwindungen, z.B. bei Hebe-/Senkbewegungen, kann das im Normalfall auf mindestens zwei Fahrzeugachsen, beispielsweise die Vorderachse und die Hinterachse, einwirkende Parkbremssystem also selektiv gelöst werden, indem eine oder mehrere, aber nicht alle Achs-Parkbremseinrichtungen an den zwei oder mehr Fahrzeugachsen während des Hebe-/Senkvorgangs deaktiviert werden, z.B. durch Aktivierung des mindestens einen Parkbremsventils.

Vorteilhaft können die erste und die zweite Achs-Parkbremseinrichtung jeweils durch einen separaten oder gemeinsamen Parkbremskreis oder auch durch eine während des Parkens im Bremseingriff befindliche Betriebsbremse gebildet sein.

Im Rahmen einer besonders vorteilhaften Weiterbildung bietet das Konzept der Erfindung auch die Basis dafür, dass bei Ausfall einer der ersten oder zweiten Achs-Parkbremseinrichtungen oder einer Komponente davon -wie z.B. eines Parkbrems-Relaisventils- dennoch eine Parkbremswirkung erzielt werden kann; nämlich beispielsweise unter Nutzung einer über das mindestens eine Parkbremsventil aktuierten Versorgungs-Druckfluidquelle für wenigstens eine der ersten oder zweiten Achs-Parkbremseinrichtungen.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Gemäß einer Weiterbildung kann das Parkbremsventil mindestens drei Anschlüsse aufweisen, die mit einem Parkbrems-Relaisventil, einer Druckfluidquelle und der ersten Achs-Parkbremseinrichtung verbunden sind. Das Parkbremsventil lässt sich zwischen einer ersten Stellung, in der die erste und/oder zweite Achs-Parkbremseinrichtung mit dem Parkbrems-Relaisventil verbunden ist und damit den gleichen Betriebsbedingungen wie die andere Achs-Parkbremseinrichtung ausgesetzt ist, und einer zweiten Stellung umschalten, in der die erste und/oder zweite Achs-Parkbremseinrichtung mit der Druckfluidquelle verbunden ist und durch diese unabhängig vom Zustand der anderen Achs-Parkbremseinrichtung in den gelösten, d.h. die zugehörige Fahrzeugachse nicht bremsenden Zustand versetzt wird. Damit lässt sich eine rasche achsselektive Freigabe der Bremsung mindestens einer Fahrzeugachse erreichen.

Die erste Achs-Parkbremseinrichtung kann bei einer Weiterbildung auf die Vorderachse des Fahrzeugs einwirken und damit als Vorderachs-Parkbremseinrichtung wirksam sein. Alternativ kann die erste Achs-Parkbremseinrichtung auch auf die Hinterachse des Fahrzeugs oder auf eine andere Achse bei einem mehrachsigen Fahrzeug einwirken.

Gemäß einer Weiterbildung der vorliegenden Erfindung ist eine Steuereinrichtung zur Steuerung des mindestens einen Parkbremsventils vorhanden, die das mindestens eine Parkbremsventil vor oder bei einer Betätigung einer Lifteinrichtung des Fahrzeugs, z.B. einem Hebe- oder Senkvorgang einer Fahrzeugkomponente wie etwa eines Fahrzeugaufbaus oder Fahrgestells, einer Liftanlage, oder dergleichen in eine die erste und/oder zweite Achs-Parkbremseinrichtung selektiv lösende, d.h. nicht länger bremsende Stellung schaltet, wobei sich vorzugsweise die zweite Achs-Parkbremseinrichtung weiterhin in ihrem Wirkeingriff befindet.

Damit lassen sich Fahrzeugverwindungen oder unerwünschte Verkippungen vermeiden und zugleich die Sicherheit gegen unerwünschtes Verrollen des Fahrzeugs gewährleisten.

In einer Weiterbildung ist die Steuereinrichtung zur Steuerung und/oder Erfassung einer Aktivierung einer Lifteinrichtung oder allgemein einer Hebe- und Senkkomponente, wie etwa einer Luftfederung, eines Fahrzeugaufbaus, einer Fahrerkabine oder dergleichen ausgelegt. Die Steuereinrichtung kann in Abhängigkeit von der von ihr selbst gesteuerten und/oder erfassten Betätigung der Lifteinrichtung das mindestens eine Parkbremsventil gezielt so steuern, dass die erste und/oder zweite Achs-Parkbremseinrichtung gelöst wird, d.h. die zugeordnete Achse nicht länger gebremst wird. Durch diese aktive Steuerung und/oder Erfassung lässt sich eine zeitrichtige Steuerung und gegebenenfalls Synchronisation des Lösens der ersten Achs-Parkbremseinrichtung und der Hebe- und/oder Senkvorgänge sicherstellen.

Das mindestens eine Parkbremsventil kann in einer Weiterbildung als Magnetventil, beispielsweise als elektrisch gesteuertes Magnetventil, und/oder als Wegeventil ausgebildet sein, so dass sich die Fluidspeisung der ersten und/oder zweiten Achs-Parkbremseinrichtung gezielt und zuverlässig steuern lässt. Das mindestens eine Parkbremsventil kann auch als mit der Druckfluidquelle verbundenes vorgesteuertes Ventil ausgebildet sein, so dass schnelles Schaltverhalten bei verringerter elektrischer Leistungsaufnahme erreichbar sind.

In einer weiteren Weiterbildung ist ein zusätzliches Ventil zur selektiven Sperrung oder Freigabe des Fluidstroms zur ersten Achs-Parkbremseinrichtung vorgesehen. Das zusätzliche Ventil kann an geeigneter Position zwischen der ersten und/oder zweiten Achs-Parkbremseinrichtung einerseits und dem Parkbremsventil andererseits, oder auch zwischen dem mindestens einen Parkbremsventil und der Druckfluidquelle oder an einer sonstigen, die selektive Sperrung oder Freigabe des Fluidstroms zur ersten Achs-Parkbremseinrichtung ermöglichenden Position angeordnet sein. Das zusätzliche Ventil kann zur Sperrung oder Freigabe einer Fluidverbindung zwischen dem mindestens einen Parkbremsventil und der ersten Achs-Parkbremseinrichtung ausgelegt sein und bietet eine zusätzliche Steuerungsmöglichkeit für die Fluidspeisung der ersten Achs-Parkbremseinrichtung.

Gemäß einer Weiterbildung wird das zusätzliche Ventil in die Sperrstellung geschaltet und damit die weitere Fluidspeisung der ersten Achs-Parkbremseinrichtung unterbunden, wenn ein bestimmter Druck in der Fluidleitung zur ersten Achs-Parkbremseinrichtung erreicht oder eine andere Bedingung erfüllt ist. Diese selektive Sperrung der Druckfluidspeisung der ersten Achs-Parkbremseinrichtung erlaubt es, die erste Achs-Parkbremseinrichtung in die gelöste, d.h. die zugeordnete Achse nicht länger bremsende Stellung zu bringen, anschließend aber eine weitere Fluidspeisung der ersten Achs-Parkbremseinrichtung zu vermeiden. Damit lassen sich Druckfluidverluste und entsprechende Energieverluste bei nachfolgendem erneutem Arretieren der ersten Achs-Parkbremseinrichtung gering halten, da die erste Achs-Parkbremseinrichtung lediglich in den Lösungszustand, nicht aber in einen voll geöffneten Zustand gebracht werden muss. Auch die Zeitdauer zum Wieder-Arretieren der ersten und/oder zweiten Achs-Parkbremseinrichtung lässt sich durch dieses zusätzliche Ventil verkürzen.

Das zusätzliche Ventil kann auch bei Erfüllung einer anderen Bedingung in die Sperrstellung geschaltet werden, beispielsweise bei gezielter Erfassung des Eingriffszustands der ersten Achs-Parkbremseinrichtung, wobei die andere Bedingung hier das Erfassen des gelösten Zustandes darstellen kann. Alternativ kann die andere Bedingung auch durch Ablauf eines vorbestimmten Zeitintervalls nach Beginn der Fluidspeisung der ersten Achs-Parkbremseinrichtung gebildet sein, wobei die vorbestimmte Zeitdauer so lang bemessen ist, dass mindestens ein partielles, vorzugsweise ein vollständiges Lösen der ersten Achs-Parkbremseinrichtung gewährleistet ist. Alternativ kann auch das zur ersten Achs-Parkbremseinrichtung gespeiste Fluidvolumen als Bedingung zur Sperrung des zusätzlichen Ventils verwendet werden, so dass das zusätzliche Ventil bei Erreichen eines zur partiellen oder vollständigen Lösung ausreichenden, in die erste Achs-Parkbremseinrichtung einge-speisten Fluidvolumens gesperrt wird.

Vorzugsweise ist das zusätzliche Ventil fluidverbunden zwischen der ersten Achs-Parkbremseinrichtung und dem Parkbremsventil und/oder zwischen der ersten Achs-Parkbremseinrichtung und einer ersten Versorgungs-Druckfluidquelle angeordnet. Eine entsprechende Fluidverbindung ist bevorzugt als eine erste Parkbremsleitung ausgebildet - diese kann, wie beispielsweise in der Zeichnung ausgeführt, als eine so bezeichnete erste Fluidleitung gebildet sein.

Das zusätzliche Ventil kann gemäß einer Weiterbildung als Magnetventil, insbesondere als elektrisches Magnetventil und/oder als Wegeventil, beispielsweise als mit einer oder der Druckfluidquelle verbundenes vorgesteuertes Ventil ausgebildet sein, so dass sich gute, rasche Steuerbarkeit bei zuverlässigem Aufbau ergibt.

Bei einer weiteren Weiterbildung des Parkbremssystems kann alternativ, oder zusätzlich zu dem zusätzlichen Ventil, ein weiteres Ventil in einer Fluidleitung zwischen der zweiten Achs-Parkbremseinrichtung und dem mindestens einen Parkbremsventil oder einer Druckfluidquelle angeordnet und zur Sperrung oder Freigabe einer Fluidverbindung zwischen dem mindestens einen Parkbremsventil und der zweiten Achs-Parkbremseinrichtung ausgelegt sein. Dieses weitere Ventil kann gleichartig wie das vorstehend beschriebene zusätzliche Ventil ausgelegt und zur Steuerung der Fluidspeisung der zweiten Achs-Parkbremseinrichtung angeordnet sein. Gemäß einer Weiterbildung wird das weitere Ventil in die Sperrstellung geschaltet und damit die weitere Fluidspeisung der zweiten Achs-Parkbremseinrichtung unterbunden, wenn ein bestimmter Druck in der Fluidleitung zur zweiten Achs-Parkbremseinrichtung erreicht oder eine andere Bedingung erfüllt ist. Diese selektive Sperrung der Druckfluidspeisung der zweiten Achs-Parkbremseinrichtung erlaubt es, die zweite Achs-Parkbremseinrichtung in die gelöste, d.h. die zugeordnete Achse nicht länger bremsende Stellung zu bringen, anschließend aber eine weitere Fluidspeisung der zweiten Achs-Parkbremseinrichtung zu vermeiden. Damit lassen sich Druckfluidverluste und entsprechende Energieverluste bei nachfolgendem erneutem Arretieren der zweiten Achs-Parkbremseinrichtung gering halten, da die zweite Achs-Parkbremseinrichtung lediglich in den Lösungszustand, nicht aber in einen voll geöffneten Zustand gebracht werden muss. Auch die Zeitdauer zum Wieder-Arretieren der ersten und/oder zweiten Achs-Parkbremseinrichtung lässt sich durch dieses weitere Ventil verkürzen.

Das weitere Ventil kann auch bei Erfüllung einer anderen Bedingung in die Sperrstellung geschaltet werden, beispielsweise bei gezielter Erfassung des Eingriffszustands der zweiten Achs-Parkbremseinrichtung, wobei die andere Bedingung hier dann das Erfassen des gelösten Zustandes darstellt. Alternativ kann die andere Bedingung auch durch Ablauf eines vorbestimmten Zeitintervalls nach Beginn der Fluidspeisung der zweiten Achs-Parkbremseinrichtung gebildet sein, wobei die vorbestimmte Zeitdauer so lang bemessen ist, dass mindestens ein partielles, vorzugsweise ein vollständiges Lösen der zweiten Achs-Parkbremseinrichtung gewährleistet ist. Alternativ kann auch das zur zweiten Achs-Parkbremseinrichtung gespeiste Fluidvolumen als Bedingung zur Sperrung des weiteren Ventils verwendet werden, so dass das weitere Ventil bei Erreichen eines zur partiellen oder vollständigen Lösung ausreichenden, in die zweite Achs-Parkbremseinrichtung eingespeisten Fluidvolumens gesperrt wird.

Vorzugsweise ist das weitere Ventil fluidverbunden zwischen der zweiten Achs-Parkbremseinrichtung und dem Parkbremsventil und/oder zwischen der ersten Achs-Parkbremseinrichtung und einer zweiten Versorgungs-Druckfluidquelle angeordnet. Eine entsprechende Fluidverbindung ist bevorzugt als eine zweite Parkbremsleitung ausgebildet - diese kann, wie beispielsweise in der Zeichnung ausgeführt, als eine so bezeichnete sechste Fluidleitung gebildet sein.

Das weitere Ventil kann gemäß einer Weiterbildung als Magnetventil, insbesondere als elektrisches Magnetventil und/oder als Wegeventil, beispielsweise als mit einer oder der Druckfluidquelle verbundenes vorgesteuertes Ventil ausgebildet sein, so dass sich gute, rasche Steuerbarkeit bei zuverlässigem Aufbau ergibt.

Gemäß einer Weiterbildung kann ein Drucksensor in oder an der Fluidleitung zwischen der ersten oder zweiten Achs-Parkbremseinrichtung und dem mindestens einen Parkbremsventil oder der Druckfluidquelle angeordnet sein, so dass der Fluiddruck in der Fluidleitung messbar und zur Steuereinrichtung meldbar ist. Die Steuereinrichtung kann fluiddruckabhängig entsprechende Steuereingriffe vornehmen, beispielsweise die Druckfluidspeisung abschalten oder, sofern vorhanden, das zusätzliche Ventil in die Sperrstellung steuern.

Die optionale Bereitstellung einer Druckfluidquelle zur Speisung des mindestens einen Parkbremsventils und über dieses zur Speisung der ersten und/oder zweiten Achs-Parkbremseinrichtung ermöglicht es, den Fluiddruck gezielt festzulegen und gegebenenfalls höher zu wählen als der Druck des über das mindestens eine Parkbrems-Relaisventil zum Lösen des Parkbremssystems, d.h. der ersten und der zweiten Achs-Parkbremseinrichtung, beispielsweise zur Aufnahme eines normalen Fahrbetriebs, zugeführten Druckfluids. Die Bereitstellung eines erhöhten Fluiddrucks führt zu einem rascheren Lösen der ersten und/oder zweiten Achs-Parkbremseinrichtung, so dass die erste und/oder zweite Achs-Parkbremseinrichtung sehr schnell freigegeben wird, bevor oder wenn z.B. Hebe- und/oder Senkbewegungen durchgeführt werden. Demzufolge ist die Gefahr von unerwünschten Fahrzeugverwindungen noch weiter verringert.

Das Parkbremssystem ist gemäß einer Weiterbildung der Erfindung als pneumatisches Parkbremssystem ausgelegt. Alternativ kann das Parkbremssystem auch als hydraulisches Parkbremssystem ausgebildet sein.

Die Erfindung führt auch auf ein Fahrzeug gemäß dem Anspruch 14, das mit einem solchen Parkbremssystem oder mindestens einem Parkbremsventil ausgestattet ist.

Betreffend das Verfahren wird die Aufgabe durch die Erfindung mittels einem Verfahren des Anspruchs 15 gelöst. Erfindungsgemäß ist ein Verfahren zur Steuerung eines Parkbremssystems, mit mindestens einer ersten, für eine erste Fahrzeugachse vorgesehenen Achs-Parkbremseinrichtung und einer zweiten, für eine zweite Fahrzeugachse vorgesehenen Achs-Parkbremseinrichtung vorgesehen, bei dem mindestens ein mit der ersten und/oder zweiten Achs-Parkbremseinrichtung gekoppeltes Parkbremsventil derart gesteuert wird, dass die erste Achs-Parkbremseinrichtung oder die zweite Achs-Parkbremseinrichtung bei aktiviertem Parkbremssystem gelöst wird. Bei diesem Parkbremssystem kann also die erste und/oder zweite Achs-Parkbremseinrichtung zum selektiven Lösen mit Druckfluid gespeist werden, während die oder eine andere Achs-Parkbremseinrichtung in aktiviertem Zustand verbleibt, d.h. sich in Bremsstellung befindet und die zugeordnete Fahrzeugachse bremst und arretiert. Die Druckfluidspeisung der ersten und/oder zweiten Achs-Parkbremseinrichtung lässt sich optional nach Erreichen eines bestimmten Drucks in der zur ersten Achs-Parkbremseinrichtung führenden Druckfluidleitung oder Erfüllen eines anderen Parameters abschalten, so dass der Druckfluidverbrauch gering gehalten wird und ein rasches Wieder-Erreichen des die zugeordnete Fahrzeugachse wieder bremsenden Zustands der ersten Achs-Parkbremseinrichtung erzielt wird.

Bei einer Weiterbildung des Verfahrens kann das mindestens eine Parkbremsventil zwischen einer ersten Stellung, in der die erste oder zweite Achs-Parkbremseinrichtung mit einem Parkbrems-Relaisventil verbunden ist, und einer zweiten Stellung umgeschaltet werden, in der die erste und/oder zweite Achs-Parkbremseinrichtung mit einer Druckfluidquelle verbunden ist. Dabei kann das mindestens eine Parkbremsventil durch eine Steuereinrichtung bei oder vor einer Aktivierung einer Lifteinrichtung des Fahrzeugs in eine die erste oder zweite Achs-Parkbremseinrichtung selektiv lösende Stellung geschaltet werden. Hierdurch lassen sich Fahrzeugverwindung reduzieren oder gänzlich vermeiden. Vorteilhafterweise kann die Steuereinrichtung zur Steuerung und/oder Erfassung einer Aktivierung der Lifteinrichtung des Fahrzeugs ausgelegt sein und das mindestens eine Parkbremsventil in Abhängigkeit von der Aktivierung der Lifteinrichtung steuern.

Hierbei kann ein zusätzliches und/oder weiteres Ventil in einer Fluidverbindung zwischen der ersten und/oder zweiten Achs-Parkbremseinrichtung einerseits und dem mindestens einen Parkbremsventil andererseits angeordnet sein und die Fluidverbindung zwischen dem mindestens einen Parkbremsventil und der ersten und/oder zweiten Achs-Parkbremseinrichtung selektiv sperren oder freigeben. Damit lässt sich der Fluidverbrauch verringern und ein rasches Wieder-Arretieren einer selektiv freigegebenen Achs-Parkbremseinrichtung erreichen. Beispielsweise kann die Druckfluidspeisung der ersten und/oder zweiten Achs-Parkbremseinrichtung nach Erreichen eines bestimmten Drucks in der ersten oder zweiten Achs-Parkbremseinrichtung und/oder Erfüllen eines anderen Parameters abgeschaltet werden.

Eine entsprechende Fluidverbindung für das zusätzliche Ventil ist bevorzugt als eine erste Parkbremsleitung ausgebildet - diese kann, wie beispielsweise in der Zeichnung ausgeführt, als eine so bezeichnete erste Fluidleitung gebildet sein. Eine entsprechende Fluidverbindung für das weitere Ventil ist bevorzugt als eine zweite Parkbremsleitung ausgebildet - diese kann, wie beispielsweise in der Zeichnung ausgeführt, als eine so bezeichnete sechste Fluidleitung gebildet sein.

In einer Weiterbildung kann vorgesehen sein, eine manuelle Niveau-Anforderung und/oder eine Fahrzeuggeschwindigkeit zu erfassen. Vorteilhafterweise wird die erste und/oder zweite Achs-Parkbremseinrichtung lediglich bei Vorliegen einer manuellen Niveau-Anforderung und/oder bei einer Fahrzeuggeschwindigkeit von Null gelöst oder im gelösten Zustand gehalten. Hierdurch kann eine unnötige Freigabe einer oder mehrerer der Achs-Parkbremseinrichtungen oder ein unerwünschtes Verrollen des Fahrzeugs zuverlässig vermieden werden, so dass hohe Betriebssicherheit gewährleistet ist.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 eine schematische Darstellung eines Parkbremssystems gemäß einer ersten Ausführungsform,
Fig. 2 eine schematische Darstellung eines Parkbremssystems gemäß einer zweiten Ausführungsform,
Fig. 3 eine schematische Darstellung eines Parkbremssystems gemäß einer zweiten Ausführungsform mit separat steuerbaren Achs-Parkbremseinrichtungen,
Fig. 4 eine Ausführungsform eines Verfahrens gemäß dem Konzept der Erfindung zur Steuerung eines Parkbremssystems gemäß einer der zuvor erläuterten Ausführungsformen,
Fig. 5 eine detaillierte Darstellung von Verfahrensschritten, die bei der in Fig. 4 gezeigten Ausführungsform eines Verfahrens durchführbar sind, und
Fig. 6 eine alternative Ausgestaltung von Verfahrensschritten, die bei der in Fig. 4 gezeigten Ausführungsform eines Verfahrens durchführbar sind.

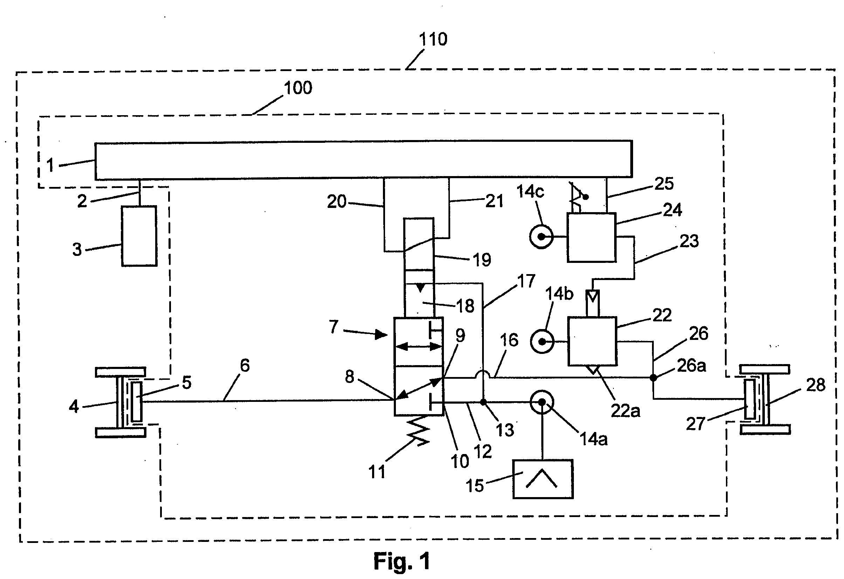

Die in Fig. 1 gezeigte beispielhafte Ausführungsform eines erfindungsgemäßen Parkbremssystems 100 eines allgemein mit 110 bezeichneten Fahrzeugs enthält eine elektronische Steuereinrichtung 1, die das Parkbremssystem 100 und optional noch eine oder mehrere weitere Fahrzeugkomponenten wie etwa eine Lifteinrichtung 3 über eine Steuerleitung 2 steuert. Die Lifteinrichtung 3 ist allgemein eine Hebe- und/oder Senkanlage zum Anheben und/oder Absenken eines Fahrgestells, einer Fahrzeugkomponente des Fahrgestells wie etwa einer einzeln oder gemeinsam zu aktivierenden Vorder- oder Hinterachse oder einer Liftachse, einer Fahrerkabine etc. Zusätzlich oder alternativ kann die elektronische Steuereinrichtung 1 auch an einen Datenbus angeschlossen sein und mit einer Mehrzahl von Sensoren zur Erfassung eines oder mehrerer Betriebszustände oder Fahrzeugparameter wie etwa Stillstand, Komponentenbetätigung, Druck, Geschwindigkeit, Fahrzeugniveau und dergleichen ausgelegt sein.

Wie in Fig. 1 gezeigt, weist das Parkbremssystem 100 eine erste Achs-Parkbremseinrichtung 5 auf, die auf eine erste Fahrzeugachse 4 einwirkt und die erste Fahrzeugachse 4 bei aktivierter Achs-Parkbremseinrichtung 5 im Stillstand hält oder bei noch rollendem Fahrzeug zum Stillstand bringt. Die erste Achs-Parkbremseinrichtung 5 kann die erste Fahrzeugachse 4 in bekannter Weise im Stillstand halten, beispielsweise durch Einwirkung auf eines oder beide an der ersten Fahrzeugachse 4 angeordnete Fahrzeugräder. Bei dem gezeigten Ausführungsbeispiel entspricht die erste Fahrzeugachse 4 der Vorderachse, kann in einer anderen Ausführungsform aber auch durch die Hinterachse oder eine mittlere Fahrzeug-Radachse gebildet sein. Die erste Achs-Parkbremseinrichtung 5 kann als Federspeicherbremse ausgelegt sein, die bei Abschaltung der Druckfluidzufuhr, beispielsweise Druckluftzufuhr, in Bremsstellung gelangt und die Fahrzeugachsendrehung bremst, während sie bei Zufuhr von Druckfluid in die gelöste, eine Fahrzeugachsendrehung ermöglichende, freigegebene Stellung gebracht wird. Das Druckfluid, insbesondere Druckluft, wird zur ersten Achs-Parkbremseinrichtung 5 über eine erste Fluidleitung 6 gespeist, in der ein Parkbremsventil 7 angeordnet ist. Die erste Fluidleitung 6 hat die Funktion einer ersten Parkbremsleitung. Das Parkbremsventil 7 kann beispielsweise Bestandteil eines elektronisch gesteuerten Luftfederungssystems, ECAS, eines Bremssystems, eines Lift- oder Hubsystems, einer elektronischen Liftsteuerung ELC oder dergleichen sein.

Das Parkbremssystem 100 weist eine zweite Achs-Parkbremseinrichtung 27 auf, die an einer zweiten Fahrzeugachse 28, z.B. der Hinterachse, wirksam ist. Bei dem gezeigten Ausführungsbeispiel wirkt die erste Achs-Parkbremseinrichtung 5 also als Vorderachsen-Parkbremse zur Bremsung der ersten, vorderen Fahrzeugachse 4, während die zweite Achs-Parkbremseinrichtung 27 bei diesem Ausführungsbeispiel als Hinterachsen-Parkbremse zur Bremsung der zweiten, hinteren Fahrzeugachse 28 dient. Alternativ kann die erste Achs-Parkbremseinrichtung aber auch zur Feststellung der hinteren oder einer weiteren Fahrzeugachse ausgelegt sein, während die zweite Achs-Parkbremseinrichtung zur Feststellung der vorderen oder einer weiteren Fahrzeugachse ausgelegt sein kann. Es können auch mehr als zwei Achs-Parkbremseinrichtungen vorhanden sein.

Das Parkbremssystem 100 kann z.B. von einem Fahrer des Fahrzeugs 110 durch Betätigung eines nicht gezeigten Aktivierungsschalters oder auch automatisch bei Stillstand oder Parken des Fahrzeugs 110 oder Ausschalten des Fahrzeugmotors aktiviert werden und aktiviert dabei die erste und die zweite Achs-Parkbremseinrichtung 5, 27, so dass die Fahrzeugachsen 4, 28 festgestellt werden.

Das Parkbremsventil 7 kann beliebige geeignete Ausführungen haben. Bei dem gezeigten Ausführungsbeispiel ist das Parkbremsventil 7 vorteilhafterweise als Wegeventil, insbesondere 3/2-Wegeventil mit einer ersten Magnetspule 19 und optionaler pneumatischer Vorsteuerung versehen. Zur Rückstellung des Parkbremsventils 7 in die in Fig. 1 gezeigte Grundstellung dient eine erste Feder 11. Das Parkbremsventil 7 weist einen ersten Anschluss 8, einen zweiten Anschluss 9 und einen dritten Anschluss 10 auf, von denen der erste Anschluss 8 mit der ersten Fluidleitung 6 -also der ersten Parkbremsleitung- verbunden ist und der zweite Anschluss 9 an eine zweite Fluidleitung 16 angeschlossen ist, die zu einem Parkbrems-Relaisventil 22 führt. Die zweite Fluidleitung 16 kann insofern auch als erste Relaisleitung bezeichnet werden. Der dritte Anschluss 10 ist mit einer dritten Fluidleitung 12 verbunden, die über eine erste Versorgungs-Druckfluidquelle 14a mit Druckfluid, insbesondere Druckluft gespeist wird. Die dritte Fluidleitung 12 kann insofern auch als erste Druckquellenleitung bezeichnet werden. Die erste Versorgungs-Druckfluidquelle 14a kann ebenso wie eine oder mehrere weitere, nachfolgend beschriebenen Druckfluidquellen durch eine Druckfluidversorgung 15, z.B. einen Kompressor, mit Druckfluid, insbesondere Druckluft versorgt werden.

Optional ist der Druck des in die dritte Fluidleitung 12 -also in die erste Druckquellenleitung- eingespeisten Druckfluids höher als der vom Parkbrems-Relaisventil 22 in die zweite Fluidleitung 16 eingespeiste Fluiddruck.

Die dritte Fluidleitung 12 -also die erste Druckquellenleitung- ist an einem Verbindungspunkt 13 mit einer vierten Fluidleitung 17 verbunden, die das Druckfluid zu einer ersten Vorsteuerungs-Kammer 18 speist. Die vierte Fluidleitung 17 kann insofern auch als erste Steuerdruckleitung bezeichnet werden. Die erste Magnetspule 19 muss zur Betätigung des Parkbremsventils 7 somit nur noch die Differenzkraft zwischen der Federkraft der ersten Feder 11 und der in Gegenrichtung wirkenden Vorsteuerungskraft der ersten Vorsteuerungs-Kammer 18 überwinden, um das Parkbremsventil 7 aus der in Fig. 1 gezeigten Grundstellung in die Wirkstellung zu verlagern. Die erste Magnetspule 19 des Parkbremsventils 7 ist über eine erste elektrische Leitung 20 und eine zweite elektrische Leitung 21 mit der elektronischen Steuereinrichtung 1 verbunden, die die Steuersignale zur Steuerung des Parkbremsventils 7 generiert und über die erste und die zweite elektrische Leitung 20, 21 die entsprechenden Treibersignale an die erste Magnetspule 19 anlegt.

Das Parkbrems-Relaisventil 22 oder, wie in Fig. 1 gezeigt, eine Steuerkammer des Parkbrems-Relaisventils 22, ist mit einem Handbremsventil 24 über eine fünfte Fluidleitung 23 und/oder eine nicht gezeigte elektrische Steuerleitung verbunden. Das Parkbrems-Relaisventil 22 ist weiterhin mit einer weiteren Druckfluidquelle 14b verbunden und wird über diese weitere Druckfluidquelle 14b mit Druckfluid, insbesondere Druckluft, gespeist. Bei aktiviertem Parkbrems-Relaisventil 22 wird der durch die weitere Druckfluidquelle 14b eingespeiste Druck durch das Parkbrems-Relaisventil 22 zu einer an seinem Druck-Ausgangsanschluss angeschlossenen sechsten Fluidleitung 26 geleitet. Die sechste Fluidleitung 26 ist über einen Verbindungspunkt 26a fluidmäßig mit der zweiten Fluidleitung 16 gekoppelt. Weiterhin ist die sechste Fluidleitung 26 einerseits direkt mit der zweiten Achs-Parkbremseinrichtung 27 verbunden und andererseits mit der ersten Achs-Parkbremseinrichtung 5 über die zweite Fluidleitung 16, das Parkbremsventil 7 und die erste Fluidleitung 6 gekoppelt. Die sechste Fluidleitung hat insofern die Funktion einer zweiten Parkbremsleitung. Das Parkbrems-Relaisventil 22 ist mit einem selektiv steuerbaren Entlüftungsanschluss 22a zur Entlüftung des Parkbrems-Relaisventils 22 und damit der sechsten Fluidleitung 26 versehen.

Das Handbremsventil 24 ist mit noch einer weiteren Druckfluidquelle 14c verbunden und wird über diese noch weitere Druckfluidquelle 14c mit Druckfluid, insbesondere Druckluft, gespeist. Das Handbremsventil 24 leitet den durch die noch weitere Druckfluidquelle 14c generierten Druck je nach Betätigungszustand der Handbremse zur fünften Fluidleitung 23 weiter oder sperrt diesen Druck, wodurch wiederum der Schaltzustand des Parkbrems-Relaisventils 22 gesteuert wird. Das Handbremsventil 24 kann optional über eine dritte elektrische Leitung 25 mit der elektronischen Steuereinrichtung 1 verbunden sein und diese über den Betätigungszustand des Handbremsventils 24 informieren.

Die in Fig. 1 gezeigte erste und Versorgungs-Druckfluidquelle 14a und die weiteren Druckfluidquellen 14b, 14c können durch dieselbe Druckfluidquelle gebildet sein oder alternativ jeweils als unabhängige Druckfluidquellen oder als jeweils eine oder zwei Komponenten speisende Druckfluidquellen ausgeführt sein.

Das Parkbrems-Relaisventil 22 wird in der Fahrzeug-Parkstellung durch Betätigung des Handbremsventils 24 in die Entlüftungsposition gebracht, so dass die erste Achs-Parkbremseinrichtung 5 und die zweite Achs-Parkbremseinrichtung 27 z.B. über die zweite Fluidleitung 16 und die sechste Fluidleitung 26 -also die zweite Parkbremsleitung- sowie den Entlüftungsanschluss 22a entlüftet und damit in Parkbremsstellung gebracht werden können. In der Parkbremsstellung sind somit normalerweise sowohl die erste Fahrzeugachse 4 als auch die zweite Fahrzeugachse 28 gemeinsam gebremst, d.h. festgestellt, und unterliegen einer gemeinsamen Steuerung.

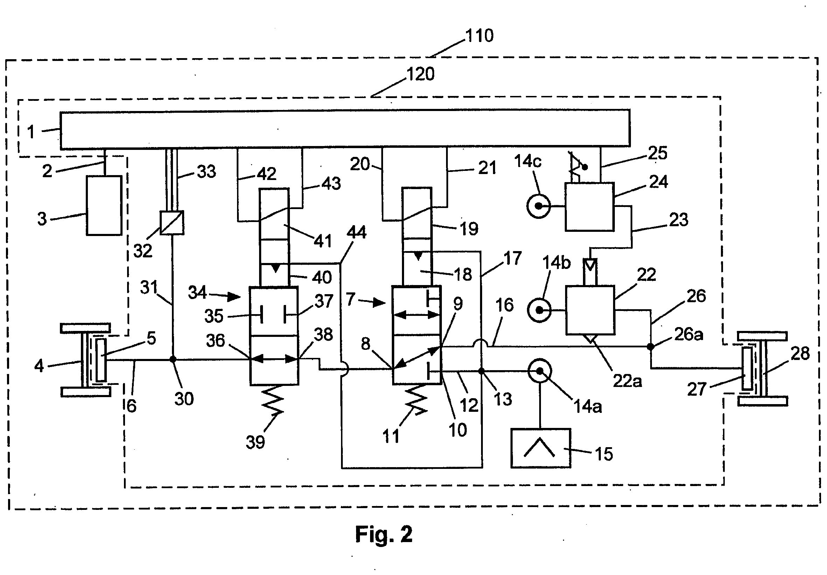

Der Betätigungszustand der ersten Achs-Parkbremseinrichtung 5 kann z.B. über einen den Druck in der ersten Fluidleitung 6 -also der ersten Parkbremsleitung- oder an einer anderen geeigneten Stelle messenden ersten Drucksensor 32 (siehe z.B. Fig. 2), oder mittels eines druckabhängig schaltenden Druckschalters im Parkbremssystem 100 oder mittels eines Signals auf einem an die elektronische Steuereinrichtung 1 angeschlossenen Datenbus erfasst werden.

Das in Fig. 1 gezeigte Parkbremsventil 7 ermöglicht eine achsselektive Lösung der ersten Achs-Parkbremseinrichtung 5 oder, bei einem abgeänderten Ausführungsbeispiel, der zweiten Achs-Parkbremseinrichtung 27. Bei dem in Fig. 1 dargestellten Ausführungsbeispiel kann die erste Achs-Parkbremseinrichtung 5 achsselektiv gelöst werden, so dass die erste Fahrzeugachse 4 drehbeweglich wird, während die zweite Achs-Parkbremseinrichtung 27 in ihrer die zweite Fahrzeugachse 28 bremsenden Stellung verbleibt. Hierzu wird das Parkbremsventil 7 über die erste und die zweite elektrische Leitung 20, 21 bestromt und schaltet entgegen der Federkraft der ersten Feder 11 in eine gemäß Fig. 1 untere Position um, bei der der erste Anschluss 8 nun mit dem dritten Anschluss 10 und damit mit der ersten Versorgungs-Druckfluidquelle 14a verbunden ist. Optional ist der Druck der ersten Versorgungs-Druckfluidquelle 14a, das heißt der in der dritten Fluidleitung 12 herrschende Druck, höher als der von der weiteren Druckfluidquelle 14b erzeugte Druck, der bei durchgeschaltetem Parkbrems-Relaisventil 22 in der zweiten Fluidleitung 16 ansteht. Damit kann ein beispielsweise als Federspeicher ausgelegter Druckspeicher der optional als Federspeicherbremse ausgebildeten ersten Achs-Parkbremseinrichtung 5 bei Umschaltung des Parkbremsventils 7 in die die Anschlüsse 8, 10 verbindende Stellung rasch gefüllt und folglich die erste Achs-Parkbremseinrichtung 5 schnell in die freigegebene, bremsunwirksame Position umgeschaltet werden.

Bei der Ausführungsform gemäß Fig. 1 ist vorteilhafterweise nur eine einzige Komponente, nämlich das Parkbremsventil 7 zur Freigabe der als Vorderachs-Feststellbremse wirkenden ersten Achs-Parkbremseinrichtung 5 anzusteuern, so dass sich ein störungsanfälliger, robuster und einfach steuerbarer Aufbau ergibt. Auch die Installation ist einfach und schnell durchführbar.

Die vorstehend beschriebenen Ausführungsformen ermöglichen eine partielle Freigabe des Parkbremssystems durch Ansteuerung über das Parkbremsventil 7. Die beschriebene Funktionalität der partiellen Parkbremssystem-Freigabe lässt sich beispielsweise bei voll luftgefederten Fahrzeugen, aber auch bei anderen Fahrzeugen wie hydraulisch gesteuerten Fahrzeugen, Nutzfahrzeugen, Personenkraftwagen, Anhängern oder dergleichen einsetzen.

Im folgenden werden die verschiedenen Schaltstellungen beschrieben.

Im Fahrbetrieb (Driving) ist das Parkbrems-Relaisventil 22 durch das Handbremsventil 24 betätigt und leitet den von der weiteren Druckfluidquelle 14b bereitgestellten Druck zur sechsten Fluidleitung 26 -also zur zweiten Parkbremsleitung- weiter. Das Parkbremsventil 7 befindet sich in seiner in Fig. 1 gezeigten Grundstellung (stromlos), so dass eine Verbindung zwischen der sechsten Fluidleitung 26 und der ersten Achs-Parkbremseinrichtung 5 vorliegt. Die erste Achs-Parkbremseinrichtung 5 und die zweite Achs-Parkbremseinrichtung 27 sind in diesem Zustand gelöst. Der über das Parkbrems-Relaisventil 22 eingespeiste Fluiddruck kompensiert die Federkraft der Federspeicher der ersten und der zweiten Achs-Parkbremseinrichtung 5, 27, so dass die erste und zweite Achs-Parkbremseinrichtung 5, 27 gelöst bleiben.

Im Betriebszustand Stillstand, mit aktivierter Parkbremse, werden das Parkbrems-Relaisventil 22 durch das Handbremsventil 24 oder den Entlüftungsanschluss 22a entlüftet. Damit werden auch die sechste Fluidleitung 26 -also die zweite Parkbremsleitung- und die zweite Fluidleitung 16 entlüftet. Das Parkbremsventil 7 befindet sich in der Grundstellung (stromlos), so dass eine Verbindung zwischen der entlüfteten sechsten Fluidleitung 26 und der ersten Achs-Parkbremseinrichtung 5 hergestellt ist. Die erste Achs-Parkbremseinrichtung 5 ist also aktiviert, da der Druck über das Parkbremsventil 7 und das Parkbrems-Relaisventil 22 abgebaut und entlüftet ist und die Bremskraft durch die Feder der Federspeicherbremse der ersten Achs-Parkbremseinrichtung 5 erzeugt wird. Auch die zweite Achs-Parkbremseinrichtung 27 an der zweiten Fahrzeugachse 28 ist aktiviert, da sie über das Parkbrems-Relaisventil 22 entlüftet ist und die für die Aktivierung erforderliche Bremskraft durch die Feder der als Federspeicherbremse ausgebildeten zweiten Achs-Parkbremseinrichtung 27 generiert wird.

Im Betriebszustand Fahrzeugstillstand, mit aktivierter Parkbremse, ist der weitere Betriebszustand "erste Achs-Parkbremseinrichtung 5 gelöst" möglich, der z.B. durch die Steuereinrichtung 1, beispielsweise eine elektronische Liftsteuerung ELC, Electronic Lift Control, freigegeben wird. Dieser weitere Betriebszustand kann von einem Fahrer des Fahrzeugs 100 oder einer anderen Person z.B. durch Betätigung eines Schalters oder sonstigen Bedienelements eingestellt werden. Die Steuereinrichtung 1 erfasst diese Betätigung des Schalters oder sonstigen Bedienelements und steuert das Parkbremsventil 7 in die erste Achs-Parkbremseinrichtung freigebende Position. Durch erneute Betätigung des Schalters oder sonstigen Bedienelements kann das Parkbremsventil 7 wieder in die die erste Achs-Parkbremseinrichtung in Wirkstellung bringende Position zurückgestellt werden.

Alternativ oder zusätzlich zur manuellen Auswahl des weiteren Betriebszustand "aktivierte Parkbremse, aber erste Achs-Parkbremseinrichtung 5 gelöst", kann die Steuereinrichtung 1 diesen weiteren Betriebszustand auch automatisch aktivieren, z.B. wenn eine Betätigung des Lifteinrichtung 3 erfasst oder befohlen wird, oder mittels eines oder mehrerer Sensoren eine Fahrzeugverwindung festgestellt wird.

In diesem Betriebszustand ist das Parkbrems-Relaisventil 22 durch das Handbremsventil 24 oder den Entlüftungsanschluss 22a entlüftet und baut daher keinen Fluiddruck auf. Die zweite Achs-Parkbremseinrichtung 27 ist aktiviert, da sie über das Parkbrems-Relaisventil 22 entlüftet ist und die Bremskraft z.B. durch die Feder des Federspeichers generiert wird. Das Parkbremsventil 7 ist in diesem Zustand aber über die elektronische Steuereinrichtung 1, beispielsweise die elektronische Liftsteuerung ELC, aktiviert, d.h. mit Strom gespeist und damit in eine aktivierte Schaltstellung umgeschaltet, bei der die Anschlüsse 8, 10 miteinander verbunden sind, während die Verbindung zwischen der ersten Fluidleitung 6 -also der ersten Parkbremsleitung- und der zweiten Fluidleitung 16 abgesperrt ist. In dieser aktivierten Schaltstellung liegt eine Verbindung zwischen dem durch die erste Versorgungs-Druckfluidquelle 14a oder die Druckfluidversorgung 15 erzeugten Versorgungsdruck und der ersten Achs-Parkbremseinrichtung 5 vor, so dass die erste Achs-Parkbremseinrichtung 5 gelöst wird. Der Versorgungsdruck auf der ersten Druckquellenleitung -hier der dritten Fluidleitung 12- kompensiert hierbei die Federkraft der ersten Achs-Parkbremseinrichtung 5 und bringt diese in die gelöste Stellung.

Wenn die selektiv gelöste erste Achs-Parkbremseinrichtung 5 nun im Stillstand zum Beispiel nach Beendigung der Betätigung der elektronischen Liftsteuerung wieder aktiviert werden soll, gibt die elektronische Steuereinrichtung 1, beispielsweise die elektronische Liftsteuerung, einen Ausgangszustand vor, bei dem das Parkbremsventil 7 wieder stromlos geschaltet, d.h. die über die erste und zweite elektrische Leitung 20, 21 zugeführte Spannung abgeschaltet wird, so dass das Parkbremsventil 7 wieder in seine Grundstellung (stromlos) zurückgebracht wird. Die zweite Achs-Parkbremseinrichtung 27 ist hierbei weiterhin aktiviert, da sie über das Parkbrems-Relaisventil 22 entlüftet bleibt und die Bremskraft durch die Feder der zweiten Achs-Parkbremseinrichtung 27 generiert wird. Das Parkbremsventil 7 stellt durch seine Umschaltung in die in Fig. 1 gezeigte Grundstellung nun wieder eine Verbindung zwischen der über das Parkbrems-Relaisventil 22 entlüfteten sechsten Fluidleitung 26 -also der zweiten Parkbremsleitung- und der ersten Achs-Parkbremseinrichtung 5 her, während der auf der dritten Fluidleitung 12 herrschende und am dritten Anschluss 10 anliegende Druck gesperrt wird. Die erste Achs-Parkbremseinrichtung 5 wird folglich wieder aktiviert, indem sie über das Parkbremsventil 7 und das Parkbrems-Relaisventil 22 entlüftet wird.

Die in Fig. 1 gezeigte, dem stromlosen Zustand des Parkbremsventils 7 entsprechende Grundstellung stellt ferner eine pneumatische Parkbremsfunktion im Fall eines Ausfalls der Elektronik, beispielsweise der elektronischen Liftsteuerung ELC, sicher. Im stromlosen Zustand befindet sich das Parkbremsventil 7 stets in seiner Grundstellung und damit in einem Durchgangsmodus, so dass eine Entlüftung der ersten Achs-Parkbremseinrichtung 5 und damit eine Aktivierung des Parkbremssystems 100 gewährleistet ist.

Bei dem in Fig. 1 gezeigten Ausführungsbeispiel wird das Parkbremsventil 7 bei gewünschter selektiver Freigabe der ersten Achs-Parkbremse 5 bestromt. Bei einem abgeänderten Ausführungsbeispiel kann das Parkbremsventil 7 dauerhaft mit Strom gespeist werden, um die in Fig. 1 gezeigte Grundstellung einzunehmen. Hierbei kann die erste Feder 11 z.B. als Zugfeder wirken oder auf der gegenüberliegenden Ventilkörper-Seite angeordnet sein und das Parkbremsventil 7 in die die Anschlüsse 8, 10 verbindende Ventilstellung vorspannen. Wenn eine Umschaltung des Parkbremsventils 7 zur Lösung der ersten Achs-Parkbremse 5 erfolgen soll, muss bei diesem abgeänderten Ausführungsbeispiel lediglich die Bestromung des Parkbremsventils 7 abgeschaltet werden, so dass das Parkbremsventil 7 durch die Federvorspannung rasch in die die Anschlüsse 8, 10 miteinander verbindende Schaltstellung umgeschaltet wird.

In Fig. 2 ist ein weiteres Ausführungsbeispiel eines erfindungsgemäßen Parkbremssystems 120 des Fahrzeugs 110 gezeigt. Soweit in den Figuren 1 und 2 gleiche Komponenten dargestellt und mit denselben Bezugszeichen versehen sind, gelten die vorstehenden Erläuterungen zu den entsprechenden Komponenten der Fig. 1 in gleicher Weise auch für die in Fig. 2 gezeigten Komponenten.

Das in Fig. 2 gezeigte Ausführungsbeispiel weist zusätzlich einen ersten Drucksensor 32 auf, der über eine siebte Fluidleitung 31 und einen Verzweigungspunkt 30 mit der ersten Fluidleitung 6 -also der ersten Parkbremsleitung- verbunden ist und den in der ersten Fluidleitung 6 herrschenden Fluiddruck misst. Der sensierte Fluiddruck wird über mindestens eine vierte elektrische Leitung 33 an die elektronische Steuereinrichtung 1 gemeldet. Der erste Drucksensor 32 kann alternativ auch als Druckschalter ausgebildet sein, dessen Schaltzustand zur elektronischen Steuereinrichtung 1 gemeldet oder von dieser abgefragt werden kann. In die erste Fluidleitung 6 - also in die erste Parkbremsleitung- ist ein zusätzliches Ventil 34 geschaltet, das bei der dargestellten Ausführungsform als Wegeventil, beispielsweise als 2/2-Wegeventil ausgebildet und als Magnetventil mit einer zweiten Magnetspule 41 ausgelegt sein kann. Optional ist eine Vorsteuerung über eine zweite Vorsteuerungs-Kammer 40 vorhanden, die über eine achte Fluidleitung 44 mit der dritten Fluidleitung 12, beispielsweise am Verbindungspunkt 13, verbunden ist und durch den von der ersten Versorgungs- Druckfluidquelle 14a erzeugten Fluiddruck gespeist wird. Die zweite Magnetspule 41 des zusätzlichen Ventils 34 ist über eine fünfte elektrische Leitung 42 und eine sechste elektrische Leitung 43 mit der elektronischen Steuereinrichtung 1 verbunden und wird durch diese gesteuert.

Das zusätzliche Ventil 34 verfügt über zwei Anschlüsse, nämlich einen vierten Anschluss 36 und einen fünften Anschluss 38, die in der in Fig. 2 gezeigten stromlosen Ventil-Grundstellung des zusätzlichen Ventils 34 direkt miteinander verbunden sind. Das zusätzliche Ventil 34 kann entgegen der Federkraft einer zweiten Feder 39 durch Bestromung der zweiten Magnetspule 41 in seine aktivierte Stellung umgeschaltet werden, in der der vierte Anschluss 36 und der fünfte Anschluss 38 durch eine erste Sperre 35 und eine zweite Sperre 37, wie gezeigt, gesperrt sind und keine Fluidströmung zwischen dem vierten Anschluss 36 und dem fünften Anschluss 38 möglich ist. Bei Beendigung der Bestromung der zweiten Magnetspule 41 wird das zusätzliche Ventil 34 durch die zweite Feder 39 wieder in seine Ventil-Grundstellung zurückgestellt.

Das in Fig. 2 gezeigte Ausführungsbeispiel ermöglicht es durch den Einsatz des zusätzlichen Ventils 34 und des optionalen ersten Drucksensors 32, eine rasche Freigabe der ersten Achs-Parkbremseinrichtung 5, d.h. eine kurze Achs-Parkbremseinrichtungs-Freigabezeit, und einen verringerten Fluid- oder Luftverbrauch bei der Freigabe der ersten Achs-Parkbremseinrichtung 5 zu erzielen. Die rasche Freigabe der ersten Achs-Parkbremseinrichtung 5 lässt sich noch zusätzlich durch Zufuhr eines hohen Versorgungsdrucks unterstützen, der über die erste Versorgungs-Druckfluidquelle 14a generiert wird. Der Freigabedruck der ersten Achs-Parkbremseinrichtung 5 liegt beispielsweise bei ungefähr 6,5 bis 7 Bar. Über die erste Versorgungs-Druckfluidquelle 14a lässt sich ein hoher Versorgungsdruck von beispielsweise 10 bis 12 bar bereitstellen. Bei Einspeisung dieses Druckfluids in die dritte Fluidleitung 12 und weiter über das in aktivierter Stellung befindliche Parkbremsventil 7 sowie das in Offenstellung befindliche zusätzliche Ventil 34 in die erste Achs-Parkbremseinrichtung 5 lässt sich diese rasch in die gelöste Stellung bringen.

Bei dem in Fig. 2 gezeigten Ausführungsbeispiel wird das zusätzliche Ventil 34 geschlossen, wenn der über den ersten Drucksensor 32 gemessene oder den Druckschalter erfasste Druck in der ersten Fluidleitung 6, d.h. der in der ersten Achs-Parkbremseinrichtung 5 wirksame Druck, den Freigabedruck von beispielsweise 6,5 bis 7 Bar erreicht oder übersteigt. Durch das Schließen des zusätzlichen Ventils 34 wird die Fluidverbindung zwischen dem Versorgungsdruck und der ersten Achs-Parkbremseinrichtung 5 unterbrochen, so dass keine Fluid- oder Luftströmung mehr stattfindet und damit der Fluidverbrauch (Luftverbrauch) verringert ist.

Weiterhin ergibt sich der Vorteil, dass bei erneuter Aktivierung der ersten Achs-Parkbremseinrichtung 5 (nach ihrer vorherigen Freigabe) nur noch ein geringeres Luftvolumen abgeführt und entlüftet werden muss, nämlich nur das bis zum Schließen des zusätzlichen Ventils 34 in der ersten Achs-Parkbremseinrichtung 5 und der ersten Fluidleitung 6 zwischen der ersten Achs-Parkbremseinrichtung 5 und dem zusätzlichen Ventil 34 gesammelte Luftvolumen. Dies bringt den weiteren Vorteil der raschen erneuten Aktivierung der ersten Achs-Parkbremseinrichtung 5, da diese schnell in ihre Brems-Wirkposition gebracht werden kann.

Die in Fig. 2 gezeigte, dem stromlosen Zustand des zusätzlichen Ventils 34 entsprechende Grundstellung des zusätzlichen Ventils 34 stellt ferner eine pneumatische Parkbremsfunktion im Fall eines Ausfalls der Elektronik, beispielsweise der elektronischen Liftsteuerung ELC sicher. Im stromlosen Zustand befindet sich das zusätzliche Ventil 34 stets im Durchgangsmodus, so dass eine Entlüftung der ersten Achs-Parkbremseinrichtung 5 und damit eine Aktivierung der ersten Achs-Parkbremseinrichtung 5 gewährleistet ist. In alternativer Ausgestaltung kann das zusätzliche Ventil 34 so angeordnet und ausgelegt sein, dass es kontinuierlich bestromt werden muss, um es im Durchgangsmodus zu halten.

Als zusätzliches Ventil 34, oder anstelle desselben, kann auch ein Sperrventil vorgesehen sein, das bei Erreichen eines bestimmten Drucks von beispielsweise 7 Bar in der ersten Achs-Parkbremseinrichtung 5 oder an einem mit dieser verbundenen Anschluss selbsttätig sperrt und keine weitere Fluidströmung zulässt. Alternativ kann das zusätzliche Ventil 34 von der elektronischen Steuereinrichtung 1 zwangsweise nach Ablauf eines vorbestimmten Zeitintervalls nach Aktivierung des Parkbremsventils 7, d.h. dessen Umschaltung in eine den ersten und dritten Anschluss 8, 10 miteinander verbindende Stellung, aktiviert werden, so dass das zusätzliche Ventil 34 in die den vierten und fünften Anschluss 36 und 38 fluidmäßig trennende Stellung versetzt wird. Alternativ kann auch das in die erste Achs-Parkbremseinrichtung 5 gespeiste Fluidvolumen ermittelt oder geschätzt werden und das zusätzliche Ventil 34 nach Erreichen eines ausreichenden Fluidvolumens in die Schließstellung geschaltet werden, so dass die weitere Speisung der ersten Achs-Parkbremseinrichtung 5 unterbunden wird, eine Entlüftung aber gleichfalls gesperrt bleibt.

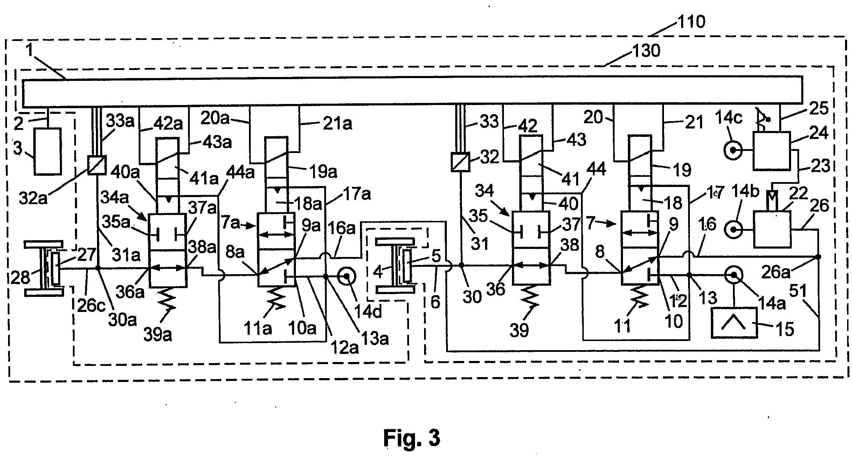

Fig. 3 zeigt ein weiteres Ausführungsbeispiel eines erfindungsgemäßen Parkbremssystems 130, bei dem sowohl für die erste Achs-Parkbremseinrichtung 5 als auch für die zweite Achs-Parkbremseinrichtung 27 jeweils eine selektive Freigabe steuerbar ist. Bei dem Ausführungsbeispiel gemäß Fig. 3 ist zusätzlich zu den in Fig. 2 gezeigten, eine selektive Freigabe der ersten Achs-Parkbremseinrichtung 5 ermöglichenden Komponenten eine im wesentlichen gleichartige Anordnung auch für die zweite Achs-Parkbremseinrichtung 27 vorgesehen, so dass auch die zweite Achs-Parkbremseinrichtung 27 trotz aktiviertem Parkbremssystem 130 selektiv freigebbar ist.

Bei dem Ausführungsbeispiel gemäß Fig. 3 ist die Anordnung der Fig. 2 im wesentlichen verdoppelt. Alternativ kann auch die Anordnung gemäß dem Ausführungsbeispiel nach Fig. 1 im wesentlichen repliziert werden, um die zweite Achs-Parkbremseinrichtung 27 in gleichartiger Weise wie die erste Achs-Parkbremseinrichtung 5 beim Ausführungsbeispiel gemäß Fig. 1 steuern zu können, wie dies vorstehend unter Bezugnahme auf Fig. 1 dargelegt ist. Des Weiteren ist es möglich, auch drei oder mehr selektiv steuerbare Achs-Parkbremseinrichtungen je nach Anzahl der Achsen des Fahrzeugs, Anhängers, Schleppers, Zugs oder dergleichen vorzusehen, wobei alle oder auch nur ein Teil der Achs-Parkbremseinrichtungen selektiv abschaltbar, d.h. freigebbar, ausgelegt sein können.

Soweit in den Figuren 1, 2 und 3 gleiche Komponenten dargestellt und mit denselben Bezugszeichen (gegebenenfalls in Fig. 3 mit zusätzlichem Buchstaben "a") versehen sind, gelten die vorstehenden Erläuterungen zu den entsprechenden Komponenten der Figuren 1 und 2 in gleicher Weise auch für die in Fig. 3 gezeigten Komponenten.

Bei dem in Fig. 3 gezeigten Ausführungsbeispiel sind die Komponenten 1 - 6, 15, 22 - 28 jeweils nur einfach vorhanden, während die weiteren, in Fig. 2 einfach vorgesehenen Komponenten nun doppelt vorhanden sind und damit eine selektive Abschaltung oder Freigabe nicht nur der ersten, sondern auch der zweiten Achs-Parkbremseinrichtung 27 erlauben. Diese doppelt vorgesehenen Komponenten sind mit dem zusätzlichen Buchstaben "a" markiert. Auch für diese mit dem Buchstaben "a" markierten Komponenten gelten die zu den zugehörigen Bezugszeichen ohne "a" gegebenen Ausführungen in gleicher Weise.

Bei dem Ausführungsbeispiel gemäß Fig. 3 ist ein zweites Parkbremsventil 7a vorhanden, über das Druckfluid, insbesondere Druckluft, zur zweiten Achs-Parkbremseinrichtung 27 über eine Fluidleitung 26d gespeist werden kann. Das zweite Parkbremsventil 7a kann beispielsweise Bestandteil eines elektronisch gesteuerten Luftfederungssystems, ECAS, eines Bremssystems, eines Lift- oder Hubsystems, einer elektronischen Liftsteuerung ELC oder dergleichen sein. Das zweite Parkbremsventil 7a kann beliebige geeignete Ausführungen haben oder auch gleich wie das Parkbremsventil 7 ausgelegt sein. Bei dem in Fig. 3 gezeigten Ausführungsbeispiel ist das zweite Parkbremsventil 7a vorteilhafterweise als Wegeventil, insbesondere 3/2-Wegeventil mit einer dritten Magnetspule 19a und optionaler pneumatischer Vorsteuerung versehen. Zur Vorspannung oder Rückstellung des zweiten Parkbremsventils 7a in die in Fig. 3 gezeigte Grundstellung dient eine dritte Feder 11a. Das zweite Parkbremsventil 7a weist einen sechsten Anschluss 8a, einen siebten Anschluss9a und einen achten Anschluss 10a auf, von denen der sechste Anschluss 8a mit einem weiteren Ventil 34a verbunden ist und der siebte Anschluss 9a an eine neunte Fluidleitung 16a angeschlossen ist, die direkt mit einer zehnten Fluidleitung 51 verbunden ist, die ihrerseits am Verbindungspunkt 26a direkt an die sechste Fluidleitung 26 angeschlossen ist und hierüber zum Parkbrems-Relaisventil 22 führt. Die neunte Fluidleitung 16 kann insofern auch als zweite Relaisleitung bezeichnet werden. Der achte Anschluss 10a ist mit einer elften Fluidleitung 12a verbunden, die über eine zweite Versorgungs-Druckfluidquelle 14d mit Druckfluid, insbesondere Druckluft gespeist wird. Insofern kann die elfte Fluidleitung 12a als zweite Druckquellenleitung bezeichnet werden. Die zweite Versorgungs-Druckfluidquelle 14d kann ebenso wie eine oder mehrere weitere, vorstehend oder nachfolgend beschriebenen Versorgungs-Druckfluidquellen 14a, 14d oder die weiteren Druckfluidquellen 14b, 14c durch die Druckfluidversorgung 15, z.B. einen Kompressor, mit Druckfluid, insbesondere Druckluft versorgt werden.

Optional ist der Druck in der elften Fluidleitung 12a -also in der zweiten Druckquellenleitung- eingespeisten Druckfluids höher als der vom Parkbrems-Relaisventil 22 in die neunte Fluidleitung 16a eingespeiste Fluiddruck.

Die elfte Fluidleitung 12a -also die zweite Druckquellenleitung- ist an einem zweiten Verbindungspunkt 13a mit einer zwölften Fluidleitung 17a verbunden, die das Druckfluid zu einer dritten Vorsteuerungs-Kammer 18a speist. Die zwölfte Fluidleitung 17 kann insofern auch als zweite Steuerdruckleitung bezeichnet werden. Eine dritte Magnetspule 19a des zweiten Parkbremsventils 7a muss zu dessen Betätigung somit nur noch die Differenzkraft zwischen der Federkraft der dritten Feder 11a und der in Gegenrichtung wirkenden Vorsteuerungskraft der dritten Vorsteuerungs-Kammer 18a überwinden, um das zweite Parkbremsventil 7a aus der in Fig. 3 gezeigten Grundstellung in die Wirkstellung zu verlagern. Die dritte Magnetspule 19a des zweiten Parkbremsventils 7a ist über eine siebte elektrische Leitung 20a und eine achte elektrische Leitung 21a mit der elektronischen Steuereinrichtung 1 verbunden, die die Steuersignale zur Steuerung des Parkbremsventils 7 und des zweiten Parkbremsventils 7a generiert und über die siebte und die achte elektrische Leitung 20a, 21a die entsprechenden Treibersignale an die dritte Magnetspule 19a anlegt.

Das Parkbrems-Relaisventil 22 wird in der Fahrzeug-Parkstellung durch Betätigung des Handbremsventils 24 in die Entlüftungsposition gebracht, so dass die erste Achs-Parkbremseinrichtung 5 und die zweite Achs-Parkbremseinrichtung 27 z.B. über die zweite Fluidleitung 16 und die dreizehnte Fluidleitung 26c sowie den Entlüftungsanschluss 22a entlüftet und damit in Parkbremsstellung gebracht werden können. In der Parkbremsstellung sind somit normalerweise sowohl die erste Fahrzeugachse 4 als auch die zweite Fahrzeugachse 28 gemeinsam gebremst, d.h. festgestellt, und unterliegen einer gemeinsamen Steuerung.

Der Betätigungszustand der zweiten Achs-Parkbremseinrichtung 27 kann z.B. über einen den Druck in der dreizehnten Fluidleitung 26c oder an einer anderen geeigneten Stelle messenden zweiten Drucksensor 32a oder mittels eines druckabhängig schaltenden Druckschalters im Parkbremssystem 130 oder mittels eines Signals auf einem an die elektronische Steuereinrichtung 1 angeschlossenen Datenbus erfasst werden.

Das in Fig. 3 gezeigte zweite Parkbremsventil 7a ermöglicht eine achsselektive Lösung der zweiten Achs-Parkbremseinrichtung 27. Bei dem in Fig. 3 dargestellten Ausführungsbeispiel können die erste Achs-Parkbremseinrichtung 5 und die zweite Achs-Parkbremseinrichtung 27 achsselektiv gelöst werden, so dass die erste oder die zweite Fahrzeugachse 4, 28 drehbeweglich wird, während die andere Achs-Parkbremseinrichtung oder eine sonstige Komponente in einer das Fahrzeug bremsenden Stellung verbleiben kann. Zur Lösung der zweiten Achs-Parkbremseinrichtung 27 wird das zweite Parkbremsventil 7a über die siebte und achte elektrische Leitung 20a, 21a bestromt und schaltet entgegen der Federkraft der dritten Feder 11a in eine gemäß Fig. 3 untere Position um, bei der ein sechster Anschluss 8a des zweiten Parkbremsventils 7a nun mit einem achten Anschluss 10a und damit mit der zweite Versorgungs-Druckfluidquelle 14d verbunden ist. Optional ist der Druck der zweiten Versorgungs-Druckfluidquelle 14d, das heißt der in der elften Fluidleitung 12a herrschende Druck, höher als der von der weiteren Druckfluidquelle 14b erzeugte Druck, der bei durchgeschaltetem Parkbrems-Relaisventil 22 in der neunten Fluidleitung 16a ansteht. Damit kann ein beispielsweise als Federspeicher ausgelegter Druckspeicher der optional als Federspeicherbremse ausgebildeten zweiten Achs-Parkbremseinrichtung 27 bei Umschaltung des zweiten Parkbremsventils 7a in die die Anschlüsse 8a, 10a verbindende Stellung rasch gefüllt und folglich die zweite Achs-Parkbremseinrichtung 27 schnell in die freigegebene, bremsunwirksame Position umgeschaltet werden.

Bei der Ausführungsform gemäß Fig. 3 sind vorteilhafterweise zwei Parkbremsventile 7, 7a zur Freigabe der ersten oder zweiten Achs-Parkbremseinrichtung 5, 27 ansteuerbar, so dass sich eine Vielzahl von Betriebsmöglichkeiten ergibt. Beispielsweise können die erste und die zweite Achs-Parkbremseinrichtung 5, 27 alternativ, zeitgleich oder zeitversetzt angesteuert werden, so dass das Parkbremssystem partiell oder stufenweise freigebbar ist.

Die vorstehend beschriebenen Ausführungsformen ermöglichen eine partielle Freigabe des Parkbremssystems durch Ansteuerung über das Parkbremsventil 7 oder das zweite Parkbremsventil 7a. Die beschriebene Funktionalität der partiellen Parkbremssystem-Freigabe lässt sich beispielsweise bei voll luftgefederten Fahrzeugen, aber auch bei anderen Fahrzeugen wie hydraulisch gesteuerten Fahrzeugen, Nutzfahrzeugen, Personenkraftwagen, Anhängern oder dergleichen einsetzen.

Im folgenden werden die verschiedenen Schaltstellungen beschrieben.

Im Fahrbetrieb (Driving) ist das Parkbrems-Relaisventil 22 durch das Handbremsventil 24 betätigt und leitet den von der weiteren Druckfluidquelle 14b bereitgestellten Druck zur sechsten Fluidleitung 26 -also zur zweiten Parkbremsleitung- weiter. Das Parkbremsventil 7 und das zweite Parkbremsventil 7a befinden sich in ihrer in Fig. 3 gezeigten Grundstellung (stromlos), so dass eine Verbindung zwischen der sechsten Fluidleitung 26 und der ersten und zweiten Achs-Parkbremseinrichtung 5, 27 vorliegt. Die erste Achs-Parkbremseinrichtung 5 und die zweite Achs-Parkbremseinrichtung 27 sind in diesem Zustand gelöst. Der über das Parkbrems-Relaisventil 22 eingespeiste Fluiddruck kompensiert die Federkraft der Federspeicher der ersten und der zweiten Achs-Parkbremseinrichtung 5, 27, so dass die erste und zweite Achs-Parkbremseinrichtung 5, 27 gelöst bleiben.

Im Betriebszustand Stillstand, mit aktivierter Parkbremse, werden das Parkbrems-Relaisventil 22 durch das Handbremsventil 24 oder den Entlüftungsanschluss 22a entlüftet. Damit werden auch die sechste Fluidleitung 26, die zweite Fluidleitung 16 und die neunte Fluidleitung 16a entlüftet. Das Parkbremsventil 7 und das zweite Parkbremsventil 7a befinden sich in ihrer Grundstellung (stromlos), so dass eine Verbindung zwischen der entlüfteten sechsten Fluidleitung 26 -also der zweiten Parkbremsleitung- und der ersten und zweiten Achs-Parkbremseinrichtung 5, 27 hergestellt ist. Die erste und zweite Achs-Parkbremseinrichtung 5, 27 sind also aktiviert, da der Druck über das Parkbremsventil 7, das zweite Parkbremsventil 7a und das Parkbrems-Relaisventil 22 abgebaut und entlüftet ist und die Bremskraft durch die Federn der Federspeicherbremsen der ersten und zweiten Achs-Parkbremseinrichtung 5, 27 erzeugt wird.

Im Betriebszustand Fahrzeugstillstand, mit aktivierter Parkbremse, sind weitere Betriebszustände "erste Achs-Parkbremseinrichtung 5 gelöst", "zweite Achs-Parkbremseinrichtung 27 gelöst", "erste und zweite Achs-Parkbremseinrichtung 5, 27 gelöst" möglich, die z.B. durch die Steuereinrichtung 1, beispielsweise eine elektronische Liftsteuerung ELC, Electronic Lift Control, gesteuert oder freigegeben werden können.

In diesen Betriebszuständen ist das Parkbrems-Relaisventil 22 durch das Handbremsventil 24 oder den Entlüftungsanschluss 22a entlüftet und baut daher keinen Fluiddruck auf. Das Parkbremsventil 7 oder das zweite Parkbremsventil 7a ist in diesem Zustand aber über die elektronische Steuereinrichtung 1, beispielsweise die elektronische Liftsteuerung ELC, aktiviert, d.h. mit Strom gespeist und damit in eine aktivierte Schaltstellung umgeschaltet, bei der der erste und dritte Anschluss 8, 10, oder der sechste und achte Anschluss 8a, 10b, miteinander verbunden sind, während die Verbindung zwischen der ersten Fluidleitung 6 und der zweiten Fluidleitung 16 oder die Verbindung zwischen der ersten Fluidleitung 6 -also der ersten Parkbremsleitung- und der neunten Fluidleitung 16a abgesperrt ist. In dieser aktivierten Schaltstellung liegt eine Verbindung zwischen dem durch die erste Versorgungs-Druckfluidquelle 14a oder zweiten Versorgungs-Druckfluidquelle 14d erzeugten Versorgungsdruck und der ersten Achs-Parkbremseinrichtung 5 oder der zweiten Achs-Parkbremseinrichtung 27 vor, so dass die erste oder zweite Achs-Parkbremseinrichtung 5, 27 gelöst wird oder ist. Der Versorgungsdruck auf einer der Druckquellenleitungen -also der dritten Fluidleitung 12 oder der elften Fluidleitung 12a- kompensiert hierbei die Federkraft der ersten oder zweiten Achs-Parkbremseinrichtung 5, 27 und bringt diese in die gelöste Stellung.

Wenn die selektiv gelöste erste oder zweite Achs-Parkbremseinrichtung 5, 27 nun im Stillstand zum Beispiel nach Beendigung der Betätigung der elektronischen Liftsteuerung wieder aktiviert werden soll, gibt die elektronische Steuereinrichtung 1, beispielsweise die elektronische Liftsteuerung, einen Ausgangszustand vor, bei dem das Parkbremsventil 7 und/oder das zweite Parkbremsventil 7a wieder stromlos geschaltet werden, d.h. die über die erste und zweite elektrische Leitung 20, 21 zugeführte Spannung, bzw. die über die siebte und achte elektrische Leitung 20a, 21a zugeführte Spannung, abgeschaltet wird, so dass das Parkbremsventil 7 bzw. das zweite Parkbremsventil 7a wieder in seine Grundstellung (stromlos) zurückgebracht wird.

Die in Fig. 3 gezeigte, dem stromlosen Zustand des zweiten Parkbremsventils 7a entsprechende Grundstellung stellt ferner eine pneumatische Parkbremsfunktion im Fall eines Ausfalls der Elektronik, beispielsweise der elektronischen Liftsteuerung ELC, sicher. Im stromlosen Zustand befindet sich das zweite Parkbremsventil 7a stets in seiner Grundstellung und damit in einem Durchgangsmodus, so dass eine Entlüftung der zweiten Achs-Parkbremseinrichtung 27 und damit eine Aktivierung des Parkbremssystems 130 gewährleistet ist.

Bei dem in Fig. 3 gezeigten Ausführungsbeispiel wird das zweite Parkbremsventil 7a bei gewünschter selektiver Freigabe der zweiten Achs-Parkbremse 27 bestromt. Bei einem abgeänderten Ausführungsbeispiel kann das zweite Parkbremsventil 7a dauerhaft mit Strom gespeist werden, um die in Fig. 3 gezeigte Grundstellung einzunehmen. Hierbei kann die dritte Feder 11a z.B. als Zugfeder wirken oder auf der gegenüberliegenden Ventilkörper-Seite angeordnet sein und das zweite Parkbremsventil 7a in die die Anschlüsse 8a, 10a verbindende Ventilstellung vorspannen. Wenn eine Umschaltung des zweiten Parkbremsventils 7a zur Lösung der zweiten Achs-Parkbremse 27 erfolgen soll, muss bei diesem abgeänderten Ausführungsbeispiel lediglich die Bestromung des zweiten Parkbremsventils 7a abgeschaltet werden, so dass das zweite Parkbremsventil 7a durch die Federvorspannung rasch in die die Anschlüsse 8a, 10a miteinander verbindende Schaltstellung umgeschaltet wird.

Das in Fig. 3 gezeigte Ausführungsbeispiel weist zusätzlich zu den bei den Ausführungsbeispielen nach Fig. 1 und 2 vorhandenen ersten Drucksensor 32 noch einen zweiten Drucksensor 32a auf, der über eine vierzehnte Fluidleitung 31a und einen zweiten Verzweigungspunkt 30a mit der dreizehnten Fluidleitung 26c verbunden ist und den in dieser herrschenden Fluiddruck misst. Der sensierte Fluiddruck wird über mindestens eine neunte elektrische Leitung 33a an die elektronische Steuereinrichtung 1 gemeldet. Der zweite Drucksensor 32a kann alternativ auch als Druckschalter ausgebildet sein, dessen Schaltzustand zur elektronischen Steuereinrichtung 1 gemeldet oder von dieser abgefragt werden kann. In die dreizehnte Fluidleitung 26c ist ein weiteres Ventil 34a geschaltet, das bei der dargestellten Ausführungsform als Wegeventil, beispielsweise als 2/2-Wegeventil ausgebildet und als Magnetventil mit einer dritten Magnetspule 41a ausgelegt sein kann. Optional ist eine Vorsteuerung über eine vierte Vorsteuerungs-Kammer 40a vorhanden, die über eine fünfzehnte Fluidleitung 44a mit der elften Fluidleitung 12a, beispielsweise am zweiten Verbindungspunkt 13a, verbunden ist und durch den von der zweiten Versorgungs-Druckfluidquelle 14d erzeugten Fluiddruck gespeist wird. Die dritte Magnetspule 41a des weiteren Ventils 34a ist über eine zehnte elektrische Leitung 42a und eine elfte elektrische Leitung 43a mit der elektronischen Steuereinrichtung 1 verbunden und wird durch diese gesteuert.

Das weitere Ventil 34a verfügt über zwei Anschlüsse, nämlich einen neunten Anschluss 36a und einen zehnten Anschluss 38a, die in der in Fig. 3 gezeigten stromlosen Ventil-Grundstellung des weiteren Ventils 34a direkt miteinander verbunden sind. Das weitere Ventil 34a kann entgegen der Federkraft einer dritten Feder 39a durch Bestromung der dritten Magnetspule 41a in seine aktivierte Stellung umgeschaltet werden, in der der neunte Anschluss 36a und der zehnte Anschluss 38a durch eine dritte Sperre 35a und eine vierte Sperre 37a, wie gezeigt, gesperrt sind und keine Fluidströmung zwischen dem neunten Anschluss 36a und dem zehnten Anschluss 38a möglich ist. Bei Beendigung der Bestromung der dritten Magnetspule 41a wird das weitere Ventil 34a durch die dritte Feder 39a wieder in seine Ventil-Grundstellung zurückgestellt.

Das in Fig. 3 gezeigte Ausführungsbeispiel ermöglicht es durch den Einsatz des weiteren Ventils 34a und des optionalen zweiten Drucksensors 32a, eine rasche Freigabe der zweiten Achs-Parkbremseinrichtung 27, d.h. eine kurze Achs-Parkbremseinrichtungs-Freigabezeit, und einen verringerten Fluid- oder Luftverbrauch bei der Freigabe der zweiten Achs-Parkbremseinrichtung 27 zu erzielen. Die rasche Freigabe der zweiten Achs-Parkbremseinrichtung 27 lässt sich noch zusätzlich durch Zufuhr eines hohen Versorgungsdrucks unterstützen, der über die zweite Versorgungs-Druckfluidquelle 14d generiert wird. Der Freigabedruck der zweiten Achs-Parkbremseinrichtung 27 liegt beispielsweise bei ungefähr 6,5 bis 7 Bar. Über die zweite Versorgungs-Druckfluidquelle 14d lässt sich ein hoher Versorgungsdruck von beispielsweise 10 bis 12 bar bereitstellen. Bei Einspeisung dieses Druckfluids über das in aktivierter Stellung befindliche zweite Parkbremsventil 7a sowie das in Offenstellung befindliche weitere Ventil 34a in die zweite Achs-Parkbremseinrichtung 27 lässt sich diese rasch in die gelöste Stellung bringen.

Bei dem gezeigten Ausführungsbeispiel wird das weitere Ventil 34a geschlossen, wenn der über den zweiten Drucksensor 32a gemessene oder den Druckschalter erfasste Druck in der dreizehnten Fluidleitung 26c, d.h. der in der zweiten Achs-Parkbremseinrichtung 27 wirksame Druck, den Freigabedruck von beispielsweise 6,5 bis 7 Bar erreicht oder übersteigt. Durch das Schließen des weiteren Ventils 34a wird die Fluidverbindung zwischen dem Versorgungsdruck und der zweiten Achs-Parkbremseinrichtung 27 unterbrochen, so dass keine weitere Fluid- oder Luftströmung stattfindet und damit der Fluidverbrauch (Luftverbrauch) verringert ist.

Weiterhin ergibt sich der Vorteil, dass bei erneuter Aktivierung der zweiten Achs-Parkbremseinrichtung 27 (nach ihrer vorherigen Freigabe) nur noch ein geringeres Luftvolumen abgeführt und entlüftet werden muss, nämlich nur das in der zweiten Achs-Parkbremseinrichtung 27 und der dreizehnten Fluidleitung 26c zwischen der zweiten Achs-Parkbremseinrichtung 27 und dem weiteren Ventil 34a gesammelte Luftvolumen. Dies bringt den weiteren Vorteil der raschen erneuten Aktivierung der zweiten Achs-Parkbremseinrichtung 27, da diese schnell in ihre Brems-Wirkposition gebracht werden kann.

Als weiteres Ventil 34a, oder an dessen Stelle, kann auch ein Sperrventil vorgesehen sein, das bei Erreichen eines bestimmten Drucks von beispielsweise 7 Bar in der zweiten Achs-Parkbremseinrichtung 27 oder an einem mit dieser verbundenen Anschluss selbsttätig sperrt und keine weitere Fluidströmung zulässt. Alternativ kann das weitere Ventil 34a von der elektronischen Steuereinrichtung 1 zwangsweise nach Ablauf eines vorbestimmten Zeitintervalls nach Aktivierung des zweiten Parkbremsventils 7a, d.h. dessen Umschaltung in eine den sechsten und achten Anschluss 8a, 10a miteinander verbindende Stellung, aktiviert werden, so dass das weitere Ventil 34a in die den neunten und zehnten Anschluss 36a und 38a fluidmäßig trennende Stellung versetzt wird. Alternativ kann auch das in die zweite Achs-Parkbremseinrichtung 27 gespeiste Fluidvolumen ermittelt oder geschätzt werden und das weitere Ventil 34a nach Erreichen eines ausreichenden Fluidvolumens in die Schließstellung geschaltet werden, so dass die weitere Speisung der zweiten Achs-Parkbremseinrichtung 27 unterbunden wird, eine Entlüftung aber gleichfalls gesperrt bleibt.

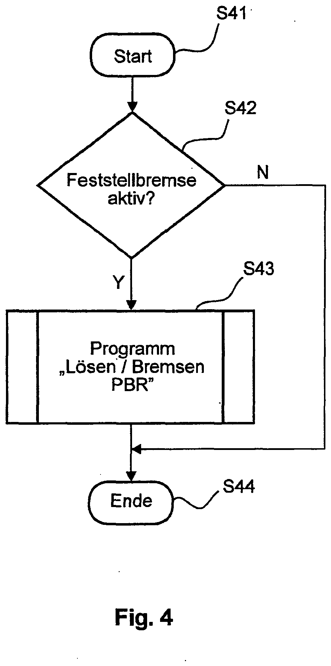

In Fig. 4 ist eine Ausführungsform eines erfindungsgemäßen Verfahrens zur Steuerung eines Parkbremssystems, z.B. des in Fig. 1, 2 oder 3 gezeigten Parkbremssystems 100, 120 bzw. 130 dargestellt. Die Ausführungsform gemäß Fig. 4 kann z.B. als Programm in einem Steuerprozessor oder der Steuereinrichtung 1 des Fahrzeugs 110 implementiert sein und enthält einen Verfahrensschritt S41, "Start", bei dem das Verfahren bei Vorliegen bestimmter Startbedingungen, z.B. Ausschaltung des Antriebsmotors, Stillstand des Fahrzeugs 110, oder dergleichen, gestartet wird. Nach dem Verfahrensschritt S41 wird ein Verfahrensschritt S42, "Feststellbremse aktiv?" abgearbeitet, der als Verzweigung ausgelegt ist und bei dem überprüft wird, ob die Feststellbremse, d.h. das Parkbremssystem 100, 120 bzw. 130, aktiv ist. Hierbei kann z.B. der Betätigungszustand eines nicht gezeigten, vom Fahrer betätigbaren Parkbremsschalters abgefragt werden. Wenn beim Verfahrensschritt S42 erkannt wird, dass das Parkbremssystem nicht aktiviert ist, geht das Programm über die Verzweigung N (Nein) direkt zu einem Verfahrensschritt S44, "Ende", über, bei dem das Programm verlassen wird.

Wenn demgegenüber beim Verfahrensschritt S42 erkannt wird, dass das Parkbremssystem aktiviert ist, schreitet das Programm über die Verzweigung Y (Ja) zu einem Verfahrensschritt S43 weiter, bei dem ein Programm "Lösen / Bremsen PBR" aufgerufen wird, durch das das Parkbremssystem, z.B. das Parkbremssystem 100, 120 bzw. 130, oder eine oder mehrere Parkbremseinrichtungen, z.B. die erste Achs-Parkbremseinrichtung 5, und/oder die zweite Achs-Parkbremseinrichtung 27, gelöst und/oder wieder aktiviert werden können.

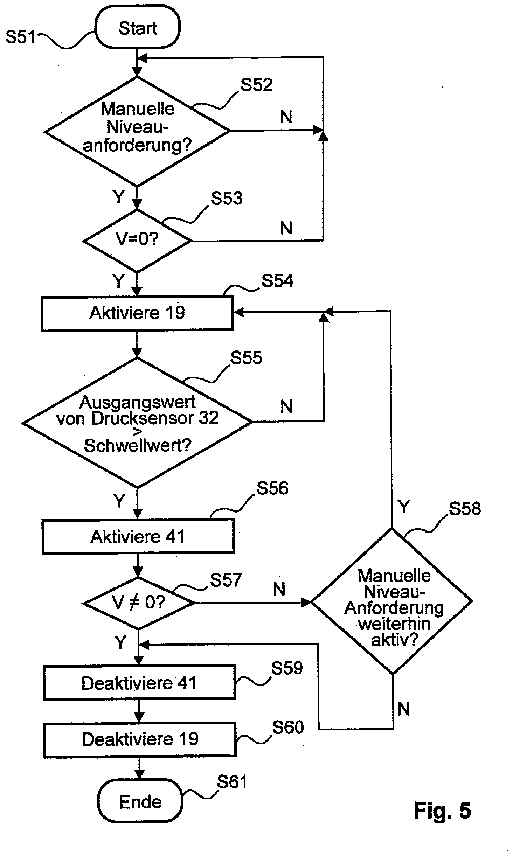

Fig. 5 zeigt eine detaillierte Darstellung von Verfahrensschritten S51 bis S61, die bei dem in Fig. 4 gezeigten, als Unterprogramm ausgelegten Verfahrensschritt S43 ausgeführt werden können. Die in Fig. 5 gezeigten Verfahrensschritte S51 bis S61 sind insbesondere bei dem in Fig. 2 dargestellten Ausführungsbeispiel des Parkbremssystem 120 durchführbar, jedoch auch bei andersgearteten Ausführungsbeispielen, z.B. dem Ausführungsbeispiel nach Fig. 3, oder -mit Ausnahme der dann entfallenden Verfahrensschritte S55, S56, S59- bei dem Ausführungsbeispiel nach Fig. 1 anwendbar.

Der Verfahrensschritt S43, d.h. das Unterprogramm "Lösen / Bremsen PBR" wird unter der Bedingung aufgerufen, dass das Parkbremsventil 7 bzw. dessen erste Magnetspule 19, und gegebenenfalls auch die zweite Magnetspule 41 des zusätzlichen Ventils 34, deaktiviert sind. Auf den Verfahrensschritt S51 "Start" als ersten Verfahrensschritt dieses Unterprogramms folgt bei dem als Verzweigung ausgelegten Verfahrensschritt S52 eine Überprüfung, ob eine manuelle Niveauanforderung vorliegt, d.h. beispielsweise die Lifteinrichtung 3 eingeschaltet worden ist. Ist dies nicht der Fall, verbleibt das Unterprogramm in einer Warteschleife, bei dem über den Zweig N zyklisch das Auftreten einer manuellen Niveauanforderung abgefragt wird. Wenn beim Verfahrensschritt S52 eine manuelle Niveauanforderung detektiert wird, schreitet das Programm zu einem Verfahrensschritt S53 weiter, bei dem überprüft wird, ob sich das Fahrzeug im Stillstand befindet, d.h. die Geschwindigkeit V bei Null liegt. Ist die Geschwindigkeit V ungleich Null, kehrt das Programm über die Verzweigung N zum Verfahrensschritt S52 zurück, so dass der Zustand des Parkbremssystems nicht verändert wird.

Wird beim Verfahrensschritt S53 erkannt, dass sich das Fahrzeug im Stillstand befindet, d.h. die Geschwindigkeit V Null ist, schreitet das Programm über die Verzweigung Y zum Verfahrensschritt S54 weiter, bei dem das Parkbremsventil 7 umgeschaltet wird, indem die erste Magnetspule 19 aktiviert, d.h. bestromt wird. Die erste Achs-Parkbremseinrichtung 5 wird in diesem Zustand von der ersten Versorgungs-Druckfluidquelle 14a mit Druckfluid gespeist und hierdurch gelöst.

Bei dem nachfolgenden, optionalen Verfahrensschritt S55 wird überprüft, ob ein in der ersten Fluidleitung 6 -also der ersten Parkbremsleitung- herrschender Druckwert, bzw. das Ausgangssignal oder der Ausgangswert des ersten Drucksensors 32, größer als ein Schwellwert ist. Der Schwellwert kann z.B. dem zum Lösen der ersten Achs-Parkbremseinrichtung 5 erforderlichen Lösedruck der als Federspeicher ausgelegten ersten Achs-Parkbremseinrichtung 5 zuzüglich einer Toleranz oder Marge von z.B. 5 bis 50% oder 10 bis 30% dieses Werts entsprechen. Wenn der vom ersten Drucksensor 32 gemessene Druckwert, d.h. der Ausgangswert des ersten Drucksensors 32, größer als der Schwellwert ist, geht das Programm über die Verzweigung Y zu dem optionalen Verfahrensschritt S56 über, andernfalls verbleibt es in einer die Verfahrensschritte S54, S55 über die Verzweigung N zyklisch durchlaufenden Schleife.

Im Verfahrensschritt S56 wird die zweite Magnetspule 41 des zusätzlichen Ventils 34 aktiviert, so dass keine weitere Fluidströmung zur ersten Achs-Parkbremseinrichtung 5 stattfindet. Im nachfolgenden Verfahrensschritt S57 wird überprüft, ob sich das Fahrzeug weiterhin im Stillstand befindet oder ob die Geschwindigkeit V nun ungleich Null geworden ist, d.h. das Fahrzeug 110 rollt. Ist die Geschwindigkeit V ungleich Null, geht das Programm über die Verzweigung Y zu den Verfahrensschritten S59 und S60 über, bei denen die zweite Magnetspule 41 des zusätzlichen Ventils 34 deaktiviert wird und auch das Parkbremsventil 7 umgeschaltet wird, indem die erste Magnetspule 19 deaktiviert wird. Die erste Achs-Parkbremseinrichtung 5 wird nun über das zusätzliche Ventil 34, das Parkbremsventil 7 und das Parkbrems-Relaisventil 22 entlüftet und hierdurch arretiert.

Ergibt die Überprüfung im Verfahrensschritt S57, dass sich das Fahrzeug weiterhin im Stillstand befindet, d.h. die Geschwindigkeit V nicht ungleich Null ist, geht das Programm über die Verzweigung N zu dem Verfahrensschritt S58 über, bei dem überprüft wird, ob die im Verfahrensschritt S52 erfasste manuelle Niveau-Anforderung weiterhin aktiv ist. Ist dies der Fall, geht das Programm über die Verzweigung Y zum Verfahrensschritt S54 oder alternativ zum Beginn eines der Verfahrensschritte S55, S56 oder S57 zurück. Wenn beim Verfahrensschritt S58 erkannt wird, dass die manuelle Niveau-Anforderung nicht mehr aktiv ist, geht das Programm über die Verzweigung N zum Verfahrensschritt S59, oder, falls nicht vorhanden, zum Verfahrensschritt S60 weiter, so dass die erste Achs-Parkbremseinrichtung 5 wieder aktiviert wird.

Nach dem Verfahrensschritt S60 endet das Programm mit dem Verfahrensschritt S61, der dem Verfahrensschritt S44 des Ausführungsbeispiels gemäß Fig. 4 entsprechen kann.

Der Programmablauf der Fig. 5 kann auch bei dem Ausführungsbeispiel gemäß Fig. 1 eingesetzt werden, wobei hier aber die Verfahrensschritte S55, S56 übersprungen werden und das Programm nach dem Verfahrensschritt S54 direkt zum Verfahrensschritt S57 übergeht. Ist die Geschwindigkeit V ungleich Null, geht das Programm über die Verzweigung Y des Verfahrensschritt S57 direkt zu dem Verfahrensschritt S60 weiter. Der Verfahrensschritt S59 entfällt in diesem Fall.

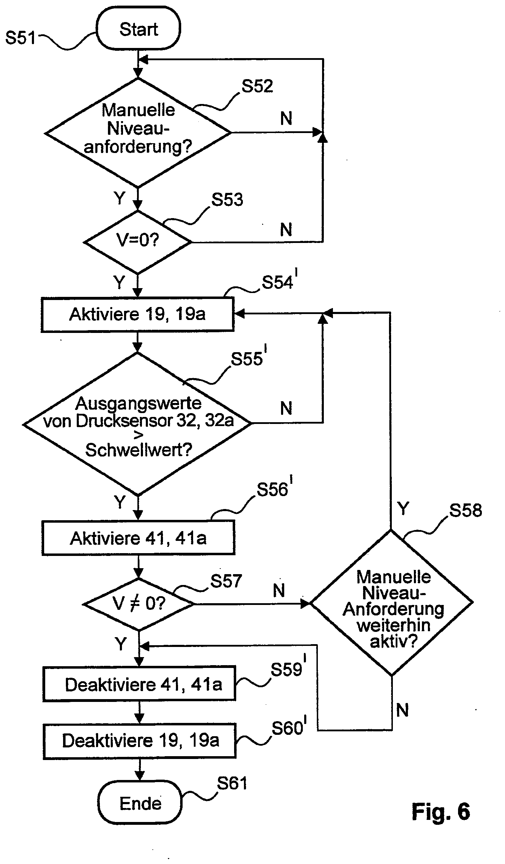

Fig. 6 zeigt eine detaillierte Darstellung eines abgeänderten Ausführungsbeispiels des Verfahrens, das bei dem Ausführungsbeispiel gemäß Fig. 3 eingesetzt werden kann und die vorstehend bereits beschriebenen Verfahrensschritte S51 bis S53, S57, S58, S61 umfasst. Die vorstehenden Erläuterungen zu diesen Verfahrensschritten sowie zum Verfahrensschritt S43, d.h. dem Unterprogramm "Lösen / Bremsen PBR", gelten für das Ausführungsbeispiel gemäß Fig. 6 in gleicher Weise. Das Verfahren nach Fig. 6 kann dem in Fig. 4 gezeigten, als Unterprogramm ausgelegten Verfahrensschritt S43 entsprechen.

Wird beim Verfahrensschritt S53 erkannt, dass sich das Fahrzeug im Stillstand befindet, d.h. die Geschwindigkeit V Null ist, schreitet das Programm über die Verzweigung Y zu einem Verfahrensschritt S54' weiter, bei dem das Parkbremsventil 7 und/oder das weitere Parkbremsventil 7a umgeschaltet werden, indem die erste Magnetspule 19 und/oder die zweite Magnetspule 41 aktiviert, d.h. bestromt werden. Die erste und/oder zweite Achs-Parkbremseinrichtung 5, 27 werden in diesem Zustand von der ersten Versorgungs-Druckfluidquelle 14a bzw. der zweiten Versorgungs-Druckfluidquelle 14d mit Druckfluid gespeist und hierdurch gelöst.

Bei einem nachfolgenden Verfahrensschritt S55' wird überprüft, ob ein in der ersten Fluidleitung 6 -also der ersten Parkbremsleitung- bzw. der dreizehnten Fluidleitung 26c herrschender Druckwert, bzw. das Ausgangssignal oder der Ausgangswert des ersten Drucksensors 32 oder des zweiten Drucksensors 32a, größer als ein Schwellwert ist. Der Schwellwert kann z.B. dem zum Lösen der ersten Achs-Parkbremseinrichtung 5 oder der zweiten Achs-Parkbremseinrichtung 27 erforderlichen Lösedruck der ersten oder zweiten Achs-Parkbremseinrichtung 5, 27 zuzüglich einer Toleranz oder Marge von z.B. 5 bis 50% oder 10 bis 30% dieses Werts entsprechen. Wenn der vom ersten Drucksensor 32 bzw. vom zweiten Drucksensor 32a gemessener Druckwert, d.h. der Ausgangswert des ersten Drucksensors 32 bzw. des zweiten Drucksensors 32a, größer als der Schwellwert ist. Ist dies der Fall, geht das Programm über die Verzweigung Y zu einem Verfahrensschritt S56' über, andernfalls verbleibt es in einer die Verfahrensschritte S54', S55' über die Verzweigung N zyklisch durchlaufenden Schleife. Der Schwellwert kann auch bei diesem Ausführungsbeispiel z.B. dem zum Lösen der ersten und/oder zweiten Achs-Parkbremseinrichtung 5, 27 erforderlichen Lösedruck der als Federspeicher ausgelegten ersten und/oder zweiten Achs-Parkbremseinrichtung 5, 27 zuzüglich einer Toleranz oder Marge von z.B. 5 bis 50% oder 10 bis 30% dieses Werts entsprechen.

Im Verfahrensschritt S56' wird die zweite Magnetspule 41 des zusätzlichen Ventils 34 und/oder die dritte Magnetspule 41a des weiteren Ventils 34a aktiviert, so dass keine weitere Fluidströmung zur ersten Achs-Parkbremseinrichtung 5 und/oder zweiten Achs-Parkbremseinrichtung 27 stattfindet. Im nachfolgenden Verfahrensschritt S57 wird überprüft, ob sich das Fahrzeug weiterhin im Stillstand befindet oder ob die Geschwindigkeit V nun ungleich Null geworden ist, d.h. das Fahrzeug 110 rollt. Ist die Geschwindigkeit V ungleich Null, geht das Programm über die Verzweigung Y zu den Verfahrensschritten S59' und S60' über, bei denen die zweite Magnetspule 41 des zusätzlichen Ventils 34 und/oder die dritte Magnetspule 41a des weiteren Ventils 34a deaktiviert werden und auch das Parkbremsventil 7 und/oder das zweite Parkbremsventil 7a umgeschaltet werden, indem die erste Magnetspule 19 und/oder die dritte Magnetspule 19a deaktiviert werden. Die erste Achs-Parkbremseinrichtung 5 wird nun über das zusätzliche Ventil 34, das Parkbremsventil 7 und das Parkbrems-Relaisventil 22 entlüftet und hierdurch arretiert. Alternativ oder zusätzlich wird die zweite Achs-Parkbremseinrichtung 27 über das weitere Ventil 34a, das zweite Parkbremsventil 7a und das Parkbrems-Relaisventil 22 entlüftet und hierdurch arretiert.

Wenn im Verfahrensschritt S58 erkannt wird, dass die manuelle Niveau-Anforderung weiterhin aktiv ist, geht das Programm über die Verzweigung Y zum Verfahrensschritt S54' oder alternativ zum Beginn eines der Verfahrensschritte S55', S56' oder S57' zurück. Wenn beim Verfahrensschritt S58 erkannt wird, dass die manuelle Niveau-Anforderung nicht mehr aktiv ist, geht das Programm über die Verzweigung N zum Verfahrensschritt S59', und/oder zum Verfahrensschritt S60' weiter, so dass die erste und/oder zweite Achs-Parkbremseinrichtung 5, 27 wieder aktiviert werden.

Nach dem Verfahrensschritt S60' endet das Programm mit dem Verfahrensschritt S61, der dem Verfahrensschritt S44 des Ausführungsbeispiels gemäß Fig. 4 entsprechen kann.

Alle vorstehend beschriebenen Komponenten und Verfahrensschritte lassen sich in beliebiger Weise miteinander kombinieren und austauschen, ohne dass der Rahmen der Erfindung verlassen wird.

### Bezugszeichenliste (Bestandteil der Beschreibung)

- 1: elektronische Steuereinrichtung
- 2: Steuerleitung
- 3: Lifteinrichtung
- 4: erste Fahrzeugachse
- 5: erste Achs-Parkbremseinrichtung
- 6: erste Fluidleitung, erste Parkbremsleitung
- 7: Parkbremsventil
- 7a: zweites Parkbremsventil
- 8: erster Anschluss
- 8a: sechster Anschluss
- 9: zweiter Anschluss
- 9a: siebter Anschluss
- 10: dritter Anschluss
- 10a: achter Anschluss
- 11: erste Feder
- 11a: dritte Feder
- 12: dritte Fluidleitung, erste Druckquellenleitung
- 12a: elfte Fluidleitung, zweite Druckquellenleitung
- 13: Verbindungspunkt
- 13a: zweiter Verbindungspunkt
- 14a: erste Versorgungs-Druckfluidquelle
- 14b: weitere Druckfluidquelle
- 14c: noch weitere Druckfluidquelle
- 14d: zweite Versorgungs-Druckfluidquelle
- 15: Druckfluidversorgung
- 16: zweite Fluidleitung, erste Relaisleitung
- 16a: neunte Fluidleitung, zweite Relaisleitung
- 17: vierte Fluidleitung, erste Steuerdruckleitung
- 17a: zwölfte Fluidleitung, zweite Steuerdruckleitung
- 18: erste Vorsteuerungs-Kammer
- 18a: dritte Vorsteuerungs-Kammer
- 19: erste Magnetspule
- 19a: dritte Magnetspule
- 20: erste elektrische Leitung
- 20a: siebte elektrische Leitung
- 21: zweite elektrische Leitung
- 21a: achte elektrische Leitung
- 22: Parkbrems-Relaisventil
- 22a: Entlüftungsanschluss
- 23: fünfte Fluidleitung
- 24: Handbremsventil
- 25: dritte elektrische Leitung
- 26: sechste Fluidleitung, zweite Parkbremsleitung
- 26a: Verbindungspunkt
- 26c: dreizehnte Fluidleitung
- 27: zweite Achs-Parkbremseinrichtung
- 28: zweite Fahrzeugachse
- 30: Verzweigungspunkt
- 30a: zweiter Verzweigungspunkt
- 31: siebte Fluidleitung
- 31a: vierzehnte Fluidleitung
- 32: Drucksensor
- 32a: zweiter Drucksensor
- 33: vierte elektrische Leitung
- 33a: neunte elektrische Leitung
- 34: zusätzliches Ventil
- 34a: weiteres Ventil
- 35: erste Sperre
- 35a: dritte Sperre
- 36: vierter Anschluss
- 36a: neunter Anschluss
- 37: zweite Sperre
- 37a: vierte Sperre
- 38: fünfter Anschluss
- 38a: zehnter Anschluss
- 39: zweite Feder
- 39a: dritte Feder
- 40: zweite Vorsteuerungs-Kammer
- 40a: vierte Vorsteuerungs-Kammer
- 41: zweite Magnetspule
- 41a: dritte Magnetspule
- 42: fünfte elektrische Leitung
- 42a: zehnte elektrische Leitung
- 43: sechste elektrische Leitung
- 43a: elfte elektrische Leitung
- 44: achte Fluidleitung
- 44a: fünfzehnte Fluidleitung
- 51: zehnte Fluidleitung
- 100: Parkbremssystem
- 110: Fahrzeug
- 120: Parkbremssystem
- 130: Parkbremssystem
- S41 bis S44: Verfahrensschritt
- S51 bis S61: Verfahrensschritt
- S54' bis S56', S59', S60': Verfahrensschritt

## Patentansprüche

1. Parkbremssystem (100, 120, 130) für ein Fahrzeug (110), mit einer ersten, für eine erste Fahrzeugachse (4) vorgesehenen Achs-Parkbremseinrichtung (5) und einer zweiten, für eine zweite Fahrzeugachse (28) vorgesehenen Achs-Parkbremseinrichtung (27), **gekennzeichnet durch** mindestens ein Parkbremsventil (7, 7a), das mit der ersten und/oder zweiten Achs-Parkbremseinrichtung (5, 27) derart gekoppelt ist, dass die erste und/oder zweite Achs-Parkbremseinrichtung (5, 27) bei aktiviertem Parkbremssystem (100, 120, 130) selektiv lösbar ist.

2. Parkbremssystem (100, 120, 130) nach Anspruch 1 **dadurch gekennzeichnet, dass** ein erstes Parkbremsventil (7) mit der ersten Achs-Parkbremseinrichtung (5) derart gekoppelt ist, dass das erste Parkbremsventil (7) eine selektive Lösung der ersten Achs-Parkbremseinrichtung (5) bei aktiviertem Parkbremssystem (100, 120, 130) ermöglicht, und/oder dass ein zweites Parkbremsventil (7a) mit der zweiten Achs-Parkbremseinrichtung (27) derart gekoppelt ist, dass das zweite Parkbremsventil (7a) eine selektive Lösung der zweiten Achs-Parkbremseinrichtung (27) bei aktiviertem Parkbremssystem (100, 120, 130) ermöglicht.

3. Parkbremssystem (100, 120, 130) nach Anspruch 1 oder 2, **dadurch gekennzeichnet, dass**
mehr als ein Parkbremsventil (7, 7a) mit der ersten und/oder zweiten Achs-Parkbremseinrichtung (5, 27) derart gekoppelt ist, dass die erste und/oder zweite Achs-Parkbremseinrichtung (5, 27) bei aktiviertem Parkbremssystem (100, 120, 130) selektiv lösbar ist.

4. Parkbremssystem (100, 120, 130) nach einem der Ansprüche 1 bis 3, **dadurch gekennzeichnet, dass** das Parkbremsventil (7, 7a) zwischen einer ersten Stellung und einer zweiten Stellung umschaltbar ist, wobei in der ersten Stellung die erste oder zweite Achs-Parkbremseinrichtung (5, 27) mit einem Parkbrems-Relaisventil (22) verbunden ist und in der zweiten Stellung die erste oder zweite Achs-Parkbremseinrichtung (5, 27) mit wenigstens einer Versorgungs-Druckfluidquelle (14a, 14d) verbunden ist.

5. Parkbremssystem (100, 120, 130) nach einem der Ansprüche 1 bis 4, **gekennzeichnet durch** eine Steuereinrichtung (1) zur Steuerung des Parkbremsventils (7, 7a) derart, dass das Parkbremsventil (7, 7a) bei oder vor einer Aktivierung einer Lifteinrichtung (3) des Fahrzeugs (110) in eine die erste oder zweite Achs-Parkbremseinrichtung (5) selektiv lösende Stellung geschaltet ist.

6. Parkbremssystem (100, 120, 130) nach Anspruch 5, **dadurch gekennzeichnet, dass** die Steuereinrichtung (1) zur Steuerung und/oder Erfassung einer Aktivierung der Lifteinrichtung (3) des Fahrzeugs (110) und zur Steuerung des Parkbremsventils (7, 7a) in Abhängigkeit von der Aktivierung der Lifteinrichtung (3) ausgelegt ist.

7. Parkbremssystem (100, 120, 130) nach einem der vorhergehenden Ansprüche, **dadurch gekennzeichnet, dass** das Parkbremsventil (7, 7a) als Magnetventil und/oder Wegeventil, insbesondere als mit einer Versorgungs-Druckfluidquelle (14a, 14d) verbundenes vorgesteuertes Ventil, ausgebildet ist.

8. Parkbremssystem (100, 120, 130) nach einem der vorhergehenden Ansprüche, **gekennzeichnet durch** ein zusätzliches Ventil (34), das fluidverbunden, insbesondere in einer ersten Fluidleitung (6), zwischen der ersten Achs-Parkbremseinrichtung (5) und dem Parkbremsventil (7) und/oder zwischen der ersten Achs-Parkbremseinrichtung (5) und einer ersten Versorgungs-Druckfluidquelle (14a) angeordnet ist und zur Sperrung oder Freigabe einer Fluidverbindung zur ersten Achs-Parkbremseinrichtung (5) ausgelegt ist.

9. Parkbremssystem (100, 120, 130) nach Anspruch 8, **dadurch gekennzeichnet, dass** die Steuereinrichtung (1) das zusätzliche Ventil (34) bei Erreichen eines bestimmten Drucks, insbesondere in der ersten Fluidleitung (6), und/oder Erfüllen einer anderen Bedingung in die Sperrstellung schaltet.

10. Parkbremssystem (100, 120, 130) nach Anspruch 8 oder 9, **dadurch gekennzeichnet, dass** das zusätzliche Ventil (34) als Magnetventil und/oder Wegeventil, insbesondere als mit einer ersten Versorgungs-Druckfluidquelle (14a) verbundenes vorgesteuertes Ventil, ausgebildet ist.

11. Parkbremssystem (100, 120, 130) nach einem der vorhergehenden Ansprüche, **gekennzeichnet durch** ein weiteres Ventil (34a), das fluidverbunden, insbesondere in einer sechsten Fluidleitung (26),
zwischen der zweiten Achs-Parkbremseinrichtung (27) und dem Parkbremsventil (7, 7a) angeordnet ist und/oder
zwischen der zweiten Achs-Parkbremseinrichtung (27) und einer zweiten Versorgungs-Druckfluidquelle (14d) angeordnet ist, wobei
das weitere Ventil (34a) zur Sperrung oder Freigabe der Fluidverbindung zur zweiten Achs-Parkbremseinrichtung (27) ausgelegt ist.

12. Parkbremssystem (100, 120, 130) nach einem der vorhergehenden Ansprüche, **gekennzeichnet durch** einen ersten und/oder zweiten Drucksensor (32, 32a), der fluidverbunden, insbesondere an oder in einer ersten und/oder sechsten Fluidleitung (6, 26), zwischen der ersten oder zweiten Achs-Parkbremseinrichtung (5, 27) und dem Parkbremsventil (7, 7a) angeordnet ist und ausgebildet ist, ein an eine Steuereinrichtung (1) anlegbaren Drucksensorsignals zu generieren.

13. Parkbremssystem (100, 120, 130) nach einem der vorhergehenden Ansprüche, **dadurch gekennzeichnet, dass** der Fluiddruck eines von einer Versorgungs-Druckfluidquelle (14a, 14d) zu dem Parkbremsventil (7, 7a) gespeisten Druckfluids höher ist als der Fluiddruck eines über ein Parkbrems-Relaisventil (22) zum Lösen der ersten oder zweiten Achs-Parkbremseinrichtung (5, 27) zuführbaren Druckfluids.

14. Fahrzeug (110) mit einem Parkbremssystem (100, 120, 130) nach einem der Ansprüche 1 bis 13.

15. Verfahren zur Steuerung eines Parkbremssystems (100, 120, 130 gemäß einem der Ansprüche 1 bis 13, mit einer ersten, für eine erste Fahrzeugachse (4) vorgesehenen Achs-Parkbremseinrichtung (5) und einer zweiten, für eine zweite Fahrzeugachse (28) vorgesehenen Achs-Parkbremseinrichtung (27), **dadurch gekennzeichnet, dass** mindestens ein mit der ersten oder zweiten Achs-Parkbremseinrichtung (5, 27) gekoppeltes Parkbremsventil (7, 7a) derart gesteuert wird, dass die erste und/oder zweite Achs-Parkbremseinrichtung (5, 27) bei aktiviertem Parkbremssystem (100, 120, 130) gelöst wird.

16. Verfahren nach Anspruch 15, **dadurch gekennzeichnet, dass** das Parkbremsventil (7, 7a) zwischen einer ersten Stellung und einer zweiten Stellung umgeschaltet wird, wobei
in der ersten Stellung die erste und/oder zweite Achs-Parkbremseinrichtung (5, 27) mit einem Parkbrems-Relaisventil (22) verbunden ist, und
in der zweiten Stellung die erste und/oder zweite Achs-Parkbremseinrichtung (5, 27) mit einer Druckfluidquelle (14a, 14d) verbunden ist.

17. Verfahren nach Anspruch 15 oder 16, **dadurch gekennzeichnet, dass** das Parkbremsventil (7, 7a) durch eine Steuereinrichtung (1) bei oder vor einer Aktivierung einer Lifteinrichtung (3) des Fahrzeugs (110) in eine die erste oder zweite Achs-Parkbremseinrichtung (5) selektiv lösende Stellung geschaltet wird.

18. Verfahren nach Anspruch 17, **dadurch gekennzeichnet, dass** die Steuereinrichtung (1) zur Steuerung und/oder Erfassung einer Aktivierung der Lifteinrichtung (3) des Fahrzeugs (110) ausgelegt ist und das Parkbremsventil (7, 7a) in Abhängigkeit von der Aktivierung der Lifteinrichtung (3) steuert.

19. Verfahren nach einem der Ansprüche 15 bis 18, **dadurch gekennzeichnet, dass** ein zusätzliches und/oder ein weiteres Ventil (34, 34a) fluidverbunden, insbesondere in einer ersten und/oder sechsten Fluidleitung (6, 26), zwischen der ersten und/oder zweiten Achs-Parkbremseinrichtung (5, 27) einerseits und dem Parkbremsventil (7, 7a) andererseits angeordnet ist und die Fluidverbindung zwischen dem Parkbremsventil (7) und der ersten und/oder zweiten Achs-Parkbremseinrichtung (5, 27) selektiv sperrt oder freigibt.

20. Verfahren nach einem der Ansprüche 15 bis 19, **dadurch gekennzeichnet, dass** eine manuelle Niveau-Anforderung und/oder eine Fahrzeuggeschwindigkeit erfasst wird und die erste und/oder zweite Achs-Parkbremseinrichtung (5, 27) lediglich bei Vorliegen einer manuellen Niveau-Anforderung und/oder einer Fahrzeuggeschwindigkeit bei Null, insbesondere gleich Null, gelöst werden oder gelöst bleiben.

21. Verfahren nach einem der Ansprüche 15 bis 20, bei dem die Druckfluidspeisung der ersten und/oder zweiten Achs-Parkbremseinrichtung (5, 27) nach Erreichen eines bestimmten Drucks in der ersten und/oder zweiten Achs-Parkbremseinrichtung (5, 27) und/oder bei Erfüllung eines anderen Parameters abgeschaltet wird.

## Claims

1. Parking brake system (100, 120, 130) for a vehicle (110), having a first axle parking brake device (5) which is provided for a first vehicle axle (4), and a second axle parking brake device (27) which is provided for a second vehicle axle (28), **characterized by** at least one parking brake valve (7, 7a) which is coupled to the first and/or second axle parking brake device (5, 27) in such a way that the first and/or second axle parking brake device (5, 27) can be released selectively in the case of an activated parking brake system (100, 120, 130).

2. Parking brake system (100, 120, 130) according to Claim 1, **characterized in that** a first parking brake valve (7) is coupled to the first axle parking brake device (5) in such a way that the first parking brake valve (7) makes a selective release of the first axle parking brake device (5) possible in the case of an activated parking brake system (100, 120, 130), and/or in that a second parking brake valve (7a) is coupled to the second axle parking brake device (27) in such a way that the second parking brake valve (7a) makes a selective release of the second axle parking brake device (27) possible in the case of an activated parking brake system (100, 120, 130).

3. Parking brake system (100, 120, 130) according to Claim 1 or 2, **characterized in that** more than one parking brake valve (7, 7a) is coupled to the first and/or second axle parking brake device (5, 27) in such a way that the first and/or second axle parking brake device (5, 27) can be released selectively in the case of an activated parking brake system (100, 120, 130).

4. Parking brake system (100, 120, 130) according to one of Claims 1 to 3, **characterized in that** the parking brake valve (7, 7a) can be switched over between a first position and a second position, the first or second axle parking brake device (5, 27) being connected to a parking brake relay valve (22) in the first position, and the first or second axle parking brake device (5, 27) being connected to at least one supply pressure fluid source (14a, 14d) in the second position.

5. Parking brake system (100, 120, 130) according to one of Claims 1 to 4, **characterized by** a control device (1) for controlling the parking brake valve (7, 7a) in such a way that, in the case of or before an activation of a lift device (3) of the vehicle (110), the parking brake valve (7, 7a) is switched into a position which selectively releases the first or second axle parking brake device (5).

6. Parking brake system (100, 120, 130) according to Claim 5, **characterized in that** the control device (1) is designed to control and/or detect an activation of the lift device (3) of the vehicle (110) and to control the parking brake valve (7, 7a) in a manner which is dependent on the activation of the lift device (3).

7. Parking brake system (100, 120, 130) according to one of the preceding claims, **characterized in that** the parking brake valve (7, 7a) is configured as a solenoid valve and/or directional valve, in particular as a pilot-controlled valve which is connected to a supply pressure fluid source (14a, 14d).

8. Parking brake system (100, 120, 130) according to one of the preceding claims, **characterized by** an additional valve (34) which is arranged in a fluid-connected manner, in particular in a first fluid line (6), between the first axle parking brake device (5) and the parking brake valve (7) and/or between the first axle parking brake device (5) and a first supply pressure fluid source (14a), and is designed to shut off or release a fluid connection to the first axle parking brake device (5).

9. Parking brake system (100, 120, 130) according to Claim 8, **characterized in that** the control device (1) switches the additional valve (34) into the shut-off position if a defined pressure is reached, in particular in the first fluid line (6), and/or if another condition is fulfilled.

10. Parking brake system (100, 120, 130) according to Claim 8 or 9, **characterized in that** the additional valve (34) is configured as a solenoid valve and/or directional valve, in particular as a pilot-controlled valve which is connected to a first supply pressure fluid source (14a).

11. Parking brake system (100, 120, 130) according to one of the preceding claims, **characterized by** a further valve (34a) which is arranged in a fluid-connected manner, in particular in a sixth fluid line (26), between the second axle parking brake device (27) and the parking brake valve (7, 7a), and/or is arranged between the second axle parking brake device (27) and a second supply pressure fluid source (14d), the further valve (34a) being designed to shut off or release the fluid connection to the second axle parking brake device (27).

12. Parking brake system (100, 120, 130) according to one of the preceding claims, **characterized by** a first and/or second pressure sensor (32, 32a) which is arranged in a fluid-connected manner, in particular on or in a first and/or sixth fluid line (6, 26) between the first or second axle parking brake device (5, 27) and the parking brake valve (7, 7a), and is configured to generate a pressure sensor signal which can be applied to a control device (1).

13. Parking brake system (100, 120, 130) according to one of the preceding claims, **characterized in that** the fluid pressure of a pressure fluid which is fed from a supply pressure fluid source (14a, 14d) to the parking brake valve (7, 7a) is higher than the fluid pressure of a pressure fluid which can be fed in via a parking brake relay valve (22) in order to release the first or second parking brake device (5, 27).

14. Vehicle (110) having a parking brake system (100, 120, 130) according to one of Claims 1 to 13.

15. Method for controlling a parking brake system (100, 120, 130) according to one of Claims 1 to 13, having a first axle parking brake device (5) which is provided for a first vehicle axle (4), and a second axle parking brake device (27) which is provided for a second vehicle axle (28), **characterized in that** at least one parking brake valve (7, 7a) which is coupled to the first or second axle parking brake device (5, 27) is controlled in such a way that the first and/or second axle parking brake device (5, 27) is released in the case of an activated parking brake system (100, 120, 130).

16. Method according to Claim 15, **characterized in that** the parking brake valve (7, 7a) is switched over between a first position and a second position, the first and/or second axle parking brake device (5, 27) being connected to a parking brake relay valve (22) in the first position, and the first and/or second axle parking brake device (5, 27) being connected to a pressure fluid source (14a, 14d) in the second position.

17. Method according to Claim 15 or 16, **characterized in that**, in the case of or before an activation of a lift device (3) of the vehicle (110), the parking brake valve (7, 7a) is switched by way of a control device (1) into a position which selectively releases the first or second axle parking brake device (5).

18. Method according to Claim 17, **characterized in that** the control device (1) is designed to control and/or detect an activation of the lift device (3) of the vehicle (110), and controls the parking brake valve (7, 7a) in a manner which is dependent on the activation of the lift device (3).

19. Method according to one of Claims 15 to 18, **characterized in that** an additional and/or a further valve (34, 34a) is arranged in a fluid-connected manner, in particular in a first and/or sixth fluid line (6, 26), between the first and/or second axle parking brake device (5, 27) on one side and the parking brake valve (7, 7a) on the other side, and selectively shuts off or releases the fluid connection between the parking brake valve (7) and the first and/or second axle parking brake device (5, 27).

20. Method according to one of Claims 15 to 19, **characterized in that** a manual ride level request and/or a vehicle speed are/is detected, and the first and/or second axle parking brake device (5, 27) are/is released or remain/remains released merely in the case of the presence of a manual ride level request and/or a vehicle speed at zero, in particular equal to zero.

21. Method according to one of Claims 15 to 20, in the case of which method the pressure fluid feed of the first and/or second axle parking brake device (5, 27) is switched off after a defined pressure is reached in the first and/or second axle parking brake device (5, 27) and/or if another parameter is fulfilled.

## Revendications

1. Système de frein de stationnement (100, 120, 130) pour un véhicule (110), comprenant un premier dispositif de frein de stationnement d'essieu (5) conçu pour un premier essieu de véhicule (4) et un deuxième dispositif de frein de stationnement d'essieu (27) conçu pour un deuxième essieu de véhicule (28), **caractérisé par** au moins une vanne de frein de stationnement (7, 7a) qui est couplée au premier et/ou au deuxième dispositif de frein de stationnement d'essieu (5, 27) de telle sorte que le premier et/ou le deuxième dispositif de frein de stationnement d'essieu (5, 27) peut être desserré de manière sélective lorsque le système de frein de stationnement (100, 120, 130) est activé.

2. Système de frein de stationnement (100, 120, 130) selon la revendication 1, **caractérisé en ce qu'**une première vanne de frein de stationnement (7) est couplée au premier dispositif de frein de stationnement d'essieu (5) de telle sorte que la première vanne de frein de stationnement (7) rend possible un desserrage sélectif du premier dispositif de frein de stationnement d'essieu (5) lorsque le système de frein de stationnement (100, 120, 130) est activé, et/ou **en ce qu'**une deuxième vanne de frein de stationnement (7a) est couplée au deuxième dispositif de frein de stationnement d'essieu (27) de telle sorte que la deuxième vanne de frein de stationnement (7a) rend possible un desserrage sélectif du deuxième dispositif de frein de stationnement d'essieu (27) lorsque le système de frein de stationnement (100, 120, 130) est activé.

3. Système de frein de stationnement (100, 120, 130) selon la revendication 1 ou 2, **caractérisé en ce que** plus d'une vanne de frein de stationnement (7, 7a) sont couplées au premier et/ou au deuxième dispositif de frein de stationnement d'essieu (5, 27) de telle sorte que le premier et/ou le deuxième dispositif de frein de stationnement d'essieu (5, 27) peut être desserré de manière sélective lorsque le système de frein de stationnement (100, 120, 130) est activé.

4. Système de frein de stationnement (100, 120, 130) selon l'une des revendications 1 à 3, **caractérisé en ce que** la vanne de frein de stationnement (7, 7a) peut être permutée entre une première position et une deuxième position, dans la première position le premier ou le deuxième dispositif de frein de stationnement d'essieu (5, 27) étant relié à une vanne relais de frein de stationnement (22) et dans la deuxième position le premier ou le deuxième dispositif de frein de stationnement d'essieu (5, 27) étant relié à au moins une source de fluide sous pression d'alimentation (14a, 14d).

5. Système de frein de stationnement (100, 120, 130) selon l'une des revendications 1 à 4, **caractérisé par** un dispositif de commande (1) destiné à commander la vanne de frein de stationnement (7, 7a) de telle sorte que la vanne de frein de stationnement (7, 7a), avant ou lors d'une activation d'un dispositif de levage (3) du véhicule (110), est commutée dans une position qui desserre de manière sélective le premier ou le deuxième dispositif de frein de stationnement d'essieu (5).

6. Système de frein de stationnement (100, 120, 130) selon la revendication 5, **caractérisé en ce que** le dispositif de commande (1) est conçu pour commander et/ou détecter une activation du dispositif de levage (3) du véhicule (110) et pour commander la vanne de frein de stationnement (7, 7a) en fonction de l'activation du dispositif de levage (3).

7. Système de frein de stationnement (100, 120, 130) selon l'une des revendications précédentes, **caractérisé en ce que** la vanne de frein de stationnement (7, 7a) est réalisée sous la forme d'une électrovanne et/ou d'une vanne de distribution, notamment sous la forme d'une vanne pilotée reliée à une source de fluide sous pression d'alimentation (14a, 14d) .

8. Système de frein de stationnement (100, 120, 130) selon l'une des revendications précédentes, **caractérisé par** une vanne supplémentaire (34) qui est disposée en liaison fluidique, notamment dans une première conduite de fluide (6) entre le premier dispositif de frein de stationnement d'essieu (5) et la vanne de frein de stationnement (7) et/ou entre le premier dispositif de frein de stationnement d'essieu (5) et une première source de fluide sous pression d'alimentation (14a) et conçue pour fermer ou pour libérer une liaison fluidique vers le premier dispositif de frein de stationnement d'essieu (5).

9. Système de frein de stationnement (100, 120, 130) selon la revendication 8, **caractérisé en ce que** le dispositif de commande (1) commute la vanne supplémentaire (34) dans la position de fermeture lorsqu'une pression déterminée est atteinte, notamment dans la première conduite de fluide (6), et/ou lorsqu'une autre condition est remplie.

10. Système de frein de stationnement (100, 120, 130) selon la revendication 8 ou 9, **caractérisé en ce que** la vanne supplémentaire (34) est réalisée sous la forme d'une électrovanne et/ou d'une vanne de distribution, notamment sous la forme d'une vanne pilotée reliée à une première source de fluide sous pression d'alimentation (14a).

11. Système de frein de stationnement (100, 120, 130) selon l'une des revendications précédentes, **caractérisé par** une autre vanne (34a) qui est reliée de manière fluidique, notamment dans une sixième conduite de fluide (26), entre le deuxième dispositif de frein de stationnement d'essieu (27) et la vanne de frein de stationnement (7, 7a) et/ou entre le deuxième dispositif de frein de stationnement d'essieu (27) et une deuxième source de fluide sous pression d'alimentation (14d), l'autre vanne (34a) étant conçue pour fermer ou pour libérer la liaison fluidique vers le deuxième dispositif de frein de stationnement d'essieu (27) .

12. Système de frein de stationnement (100, 120, 130) selon l'une des revendications précédentes, **caractérisé par** un premier et/ou un deuxième capteur de pression (32, 32a) qui est relié de manière fluidique, notamment sur ou dans une première et/ou une sixième conduite de fluide (6, 26), entre le premier ou le deuxième dispositif de frein de stationnement d'essieu (5, 27) et la vanne de frein de stationnement (7, 7a) et configuré pour générer un signal de capteur de pression pouvant être appliqué à un dispositif de commande (1).

13. Système de frein de stationnement (100, 120, 130) selon l'une des revendications précédentes, **caractérisé en ce que** la pression de fluide d'un fluide sous pression diffusé depuis une source de fluide sous pression d'alimentation (14a, 14d) vers la vanne de frein de stationnement (7, 7a) est supérieure à la pression de fluide d'un fluide sous pression pouvant être renvoyé par le biais d'une vanne relais de frein de stationnement (22) pour desserrer le premier ou le deuxième dispositif de frein de stationnement d'essieu (5, 27).

14. Véhicule (110) comprenant un système de frein de stationnement (100, 120, 130) selon l'une des revendications 1 à 13.

15. Procédé de commande d'un système de frein de stationnement (100, 120, 130) selon l'une des revendications 1 à 13, comprenant un premier dispositif de frein de stationnement d'essieu (5) conçu pour un premier essieu de véhicule (4) et un deuxième dispositif de frein de stationnement d'essieu (27) conçu pour un deuxième essieu de véhicule (28), **caractérisé en ce qu'**au moins une vanne de frein de stationnement (7, 7a) qui est couplée au premier ou au deuxième dispositif de frein de stationnement d'essieu (5, 27) est commandée de telle sorte que le premier et/ou le deuxième dispositif de frein de stationnement d'essieu (5, 27) est desserré lorsque le système de frein de stationnement (100, 120, 130) est activé.

16. Procédé selon la revendication 15, **caractérisé en ce que** la vanne de frein de stationnement (7, 7a) peut être permutée entre une première position et une deuxième position, dans la première position, le premier et/ou le deuxième dispositif de frein de stationnement d'essieu (5, 27) étant reliés à une vanne relais de frein de stationnement (22) et dans la deuxième position, le premier et/ou le deuxième dispositif de frein de stationnement d'essieu (5, 27) étant reliés à une source de fluide sous pression (14a, 14d) .

17. Procédé selon la revendication 15 ou 16, **caractérisé en ce que** la vanne de frein de stationnement (7, 7a), avant ou lors d'une activation d'un dispositif de levage (3) du véhicule (110), est commutée par un dispositif de commande (1) dans une position qui desserre de manière sélective le premier ou le deuxième dispositif de frein de stationnement d'essieu (5).

18. Procédé selon la revendication 17, **caractérisé en ce que** le dispositif de commande (1) est conçu pour commander et/ou détecter une activation du dispositif de levage (3) du véhicule (110) et commande la vanne de frein de stationnement (7, 7a) en fonction de l'activation du dispositif de levage (3).

19. Procédé selon l'une des revendications 15 à 18, **caractérisé en ce qu'**une vanne supplémentaire et/ou autre (34, 34a) est disposée en liaison fluidique, notamment dans une première et/ou une sixième conduite de fluide (6, 26) entre le premier et/ou le deuxième dispositif de frein de stationnement d'essieu (5, 27) d'une part et la vanne de frein de stationnement (7, 7a) d'autre part et ferme ou libère de manière sélective la liaison fluidique entre la vanne de frein de stationnement (7) et le premier et/ou le deuxième dispositif de frein de stationnement d'essieu (5, 27).

20. Procédé selon l'une des revendications 15 à 19, **caractérisé en ce qu'**une demande de niveau manuelle et/ou une vitesse du véhicule est détectée et le premier et/ou le deuxième dispositif de frein de stationnement d'essieu (5, 27) sont desserrés ou restent desserrés seulement en présence d'une demande de niveau manuelle et/ou d'une vitesse de véhicule proche de zéro, notamment égale à zéro.

21. Procédé selon l'une des revendications 15 à 20, lors duquel l'alimentation en fluide sous pression du premier et/ou du deuxième dispositif de frein de stationnement d'essieu (5, 27) est désactivée après avoir atteint une pression déterminée dans le premier et/ou le deuxième dispositif de frein de stationnement d'essieu (5, 27) et/ou lorsqu'un autre paramètre est satisfait.
